# EUROPEAN PATENT SPECIFICATION

(11) **EP 0 212 829 B1**
(45) Date of publication and mention of the grant of the patent: **05.10.1994**
(21) Application number: 86305343.5
(22) Date of filing: 11.07.1986
(51) Int. Cl.: C08L 83/05, C08L 83/06, C08L 83/07, C08J 9/02, C08L 83/14

(54) **Low density foams and process for their production**
Schaumstoffe mit niedriger Dichte und Verfahren für deren Herstellung
Mousses de basse densité et procédé pour la production de telles mousses

(30) Priority: 12.07.1985 US 754256
(43) Date of publication of application: 04.03.1987
(73) Proprietor: Tetrafoam Technology Corp., Richmond Hill, Ontario, Canada L4C 6K1 (CA)
(72) Inventor: Miutel, Alexander, Toronto Ontario M6S 1M5 (CA)
(74) Representative: Nöth, Heinz, Dipl.-Phys.

(56) References cited:
- DE-B- 2 030 653
- GB-A- 2 065 661
- GB-A- 2 076 841
- US-A- 3 923 705
- US-A- 4 189 545

## Description

This invention relates to flexible synthetic light weight polyorganosiloxane foam materials having small percentages of carbon-carbon bonds in their polymeric chains, and having a high degree of fire resistance along with good mechanical properties, to methods for their preparation, and to component mixtures useful in their preparation.

Silicone plastics are commonly produced by reacting organosiloxane prepolymers or polymers in the presence of a catalyst. The organosiloxane polymer may correspond to the general formula 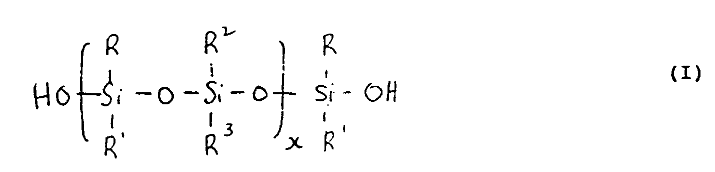
where x is an integer having a suitable value or range of values so that the polymer is a viscous liquid, and whose R, R¹, R² and R³ are organic radicals independently selected from lower alkyl radicals and aryl radicals. The terminal hydroxyl groups may be replaced by other functional groups such as lower alkoxy (i.e. alkyl - blocked hydroxy to increase the storage stability or pot life of the polymer), hydrogen, vinyl etc. In the presence of an appropriate catalyst, functional groups on the polymers react together with elimination of water, or other appropriate end group condensation or addition reaction, to form high molecular weight polyorganosiloxane resin, thus: 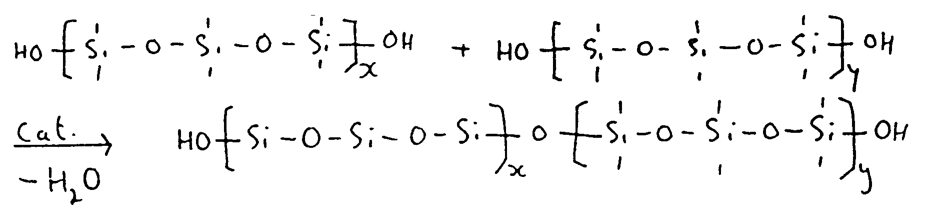
The resulting high molecular weight resins may be derived from a single organosiloxane by homopolymerization thereof, or by copolymerization of two or more organosiloxanes. The molecular weight of such silicone resins can vary over a wide range. Cross-linked resins may also be formed in this way.

It is also known to prepare foamed plastics of polyorganosiloxanes. This is accomplished by including in the polymerization mixture an organosiloxane polymer which, on condensation polymerization, releases gaseous hydrogen in situ, to act as blowing agent as the condensation polymerization proceeds. Such a compound may have the same general formula as (I) above, but in which a hydroxyl group is replaced with hydrogen. 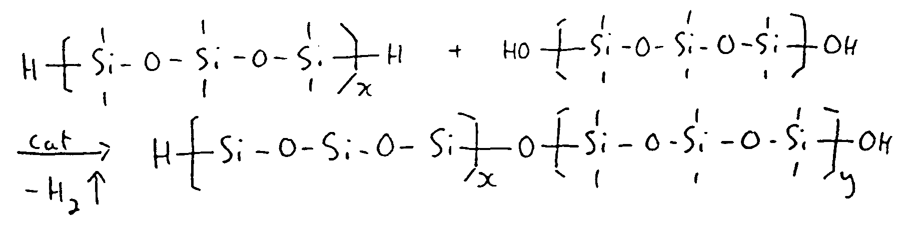
Thus silicone foams are created, with the gaseous hydrogen generated in the reaction blowing the polymerizable mixture.

Silicone foams thus prepared and having this general structure tend to be deficient in mechanical properties, especially tensile strength, flexual Strength and tear strength. In order to improve these properties, it is known to provide in a silicone rubber or silicone foam a small amount of carbon-carbon bonding, e.g. by use of vinyl-terminated silicone polymers. Thus silicone rubber or silicone foam prepared from a polymer having vinyl functional groups and polymerized with organohydrogen-siloxanes, using platinum or palladium compound catalysts, has much improved physical properties, thus: 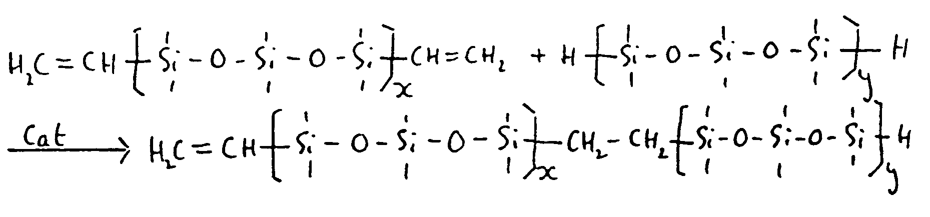
Foams can be prepared from such resins if a small amount of water and a certain excess of the hydrosiloxane (organohydrogensiloxane) is present - this is shown, for example, in U.S.-A-4,189,545 Modic. The reaction is generally as follows: 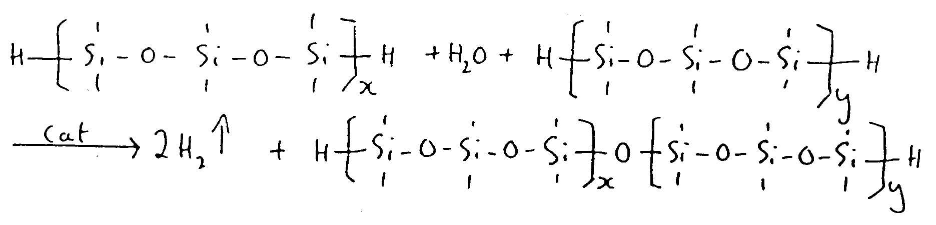
The siloxane polymeric backbone chain has a natural fire resistance. Organic substituents thereon tend to reduce the fire resistance. Accordingly, it is common to incorporate inorganic filler such as aluminum oxide, silicon dioxide, silicates, etc., into polyorganosiloxanes to obtain improvements in the fire resistance of the flexible foams thereof.

Prior art silicone foams have been limited in their utility by their relatively high density. The minimum density of silicone foam previously achieved has been about 240 kg/m³ (15 pounds per cubic foot (pcf)) and commonly such foams have a density in excess of 320 kg/m³ (20 pcf). This restricts their uses to applications such as fire resistant insulation and fire barriers in static structures capable or withstanding heavy loads, and in electrical insulation. They cannot be used in practice in applications such as vehicle insulation, vehicle upholstery, or in aircraft, where their high degree of fire resistance and non-toxicity on subjection to heat would otherwise make them very attractive.

It is an object of the present invention to provide silicone foam from resins with vinyl unsaturation, of low density, along with processes for their preparation.

It is a further object to provide such low density silicone flexible foams which have a high degree of fire resistance, very low toxicity and acceptable mechanical properties.

Accordingly, the invention provides a process for preparing a cured, flexible, fire resistant silicone foam composition of density less than 224 kg/m³, said composition comprising:
a polyorganosiloxane having a backbone polymeric structure containing a major proportion (as herein defined) of the silicone structural unit general formula (II) 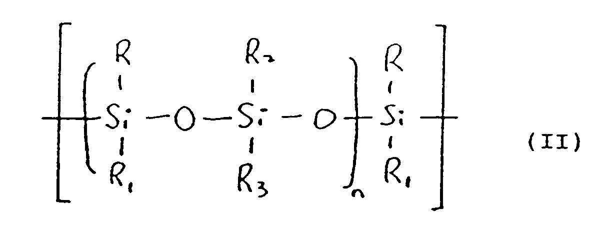
wherein each R, R₁, R₂ and R₃ may be the same or different, and is independently selected from C₁-C₄ alkyl groups and aryl groups, "n" is an integer from 2 to 100, and having a minor proportion (as herein defined) of the ethylenic structural unit (̵CH₂-CH₂)̵ linking the above silicone structural units;
which process comprises:
foaming and curing a multi-component liquid polymer mixture comprising, as part A, a vinyl-terminated polyorganosiloxane and a polydimethyl silanol terminated reactive diluent, the reactive diluent being of lower viscosity than the aforementioned vinyl-terminated polyorganosiloxane and of molecular weight from 400 to 2000, and as Part B, a second polyorganosiloxane which has hydrogen groups directly bonded to silicon in non-terminal positions along the siloxane chain, in the presence of water and a platinum-based catalyst, the reactants and conditions being such that a composition as defined above is thereby formed. Preferably, an inorganic filler is present in the reaction mixture.

The polyorganosiloxane foam product may suitably be a copolymer of a major proportion of a first organosiloxane polymer having a basic polymer backbone of structural unit 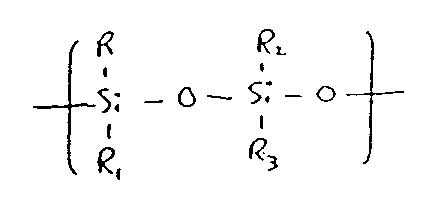
and vinyl terminal groups, where R₁, R₂, R₃ and R have the meanings given above;
a minor proportion of a second organosiloxane polymer having a basic polymer backbone of structural unit 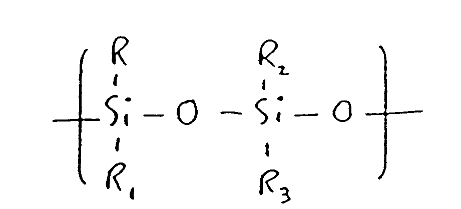
where R, R₁, R₂, and R₃ are independently selected from hydrogen, C₁₋₄ alkyl groups and phenyl groups, said second polymer having internal Si-H bonding;
and a minor proportion of a reactive polydimethyl siloxane diluent of viscosity less than that of the polyorganosiloxane polymers, and having a molecular weight from 400 to 2000, having hydroxyl functionality of at least 2.5%, being substantially free from carbon-carbon unsaturation, and corresponding to the general formula (III) 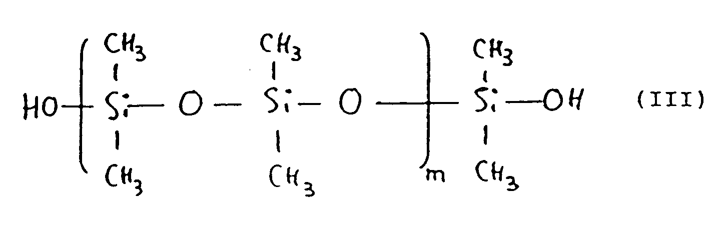
in which "m" is an integer suitably chosen to give the desired molecular weight.

The present invention provides, from one aspect, as novel compositions of matter, extremely light weight polyorganosiloxane foam compositions, having a high degree of fire resistance, the foam compositions having a density of from 64 to 224 kg/m³ (about 4 to about 14 pcf), for example 80 to 224 kg/m³ (5 to 14 pcf), preferably 80-176 kg/m³ (5-11 pcf). The foam compositions are cured, and exhibit other physical properties such as tensile strength, flexibility, modulus etc. essentially equivalent to those of prior art silicone foams of much higher density. As far as is currently known, this is the first time in which flexible silicone foams of density 224 kg/m³ (14 pcf) and lower, along with other acceptable physical properties, have actually been produced in a commercially feasible manner. The foam materials of the present invention are thus useful in a whole range of applications barred to previously known, higher density silicone foams.

The base polyorganosiloxane polymers from which the major amount of the foam resin according to the invention is derived, comprised in part A of the mixture, contain vinyl terminal groups and suitably have a basic structure corresponding to the general formula (IIa) 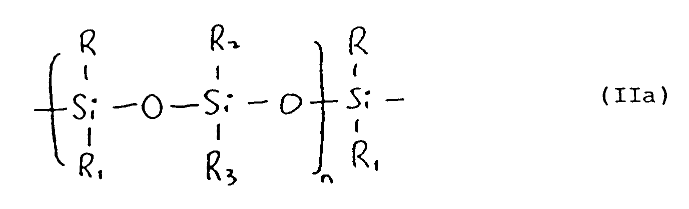
where "n" is an integer from 2 to 100 and R, R₁, R₂ and R₃ are independently selected from alkyl groups (C₁-C₄) and phenyl groups. Part B of the mixture comprises a second polyorganosiloxane which has hydrogen groups directly bonded to silicon in non-terminal positions along the siloxane chain. This second polymer may optionally have some Si-H bonds in chain-termination positions also, but suitably has unreactive lower alkyl groups as its chain termination for the most part. The first polymer, in Part A, is suitably used in weight excess of the second polymer, but the amount of Si-H bonds is preferably in molar excess of the amount of vinyl bonds in the polymer mixture. In general formula IIa, "n" is preferably 2 to 50. Foams of resins derived from such polymers, omitting the water and reactive diluent, can be obtained, but the resulting foams are of much higher density, at least 240 kg/m³ (15 pcf).

The reactive diluent is suitably carefully selected to have a hydroxyl functionality (i.e. weight percent of hydroxyl groups per molecule of reactive diluent) of at least 2.5% (for example 2.5-2.6% or 2.7-3.1%) and a molecular weight in the range of 1100-2000 and optionally lower. It should suitably have a viscosity in the range 3-8 Pa.s (30-80 poise). It is suitably used in amounts of from 2 to 12 parts by weight, preferably from 3.5 to 7.5 parts by weight, per 100 parts by combined weight of vinyl terminated polyorganosiloxane and fillers, so as to provide a part A of the reaction mixture having a viscosity of from 30 to 65 Pa.s (30,000 to 65,000 cps) at 32-34°C. The relative amounts of water and reactive diluent in the total mixture are suitably adjusted so that, in the foaming mixture, for example from 5% to 15% of the hydroxyl groups, on a molar basis, are contributed by the silanol reactive diluent, and for example from 95% to 85% are contributed by the water. The use of such small amounts of these correctly selected reactive diluents reduces the viscosity of the mixture down to a range from which very low density foams can be blown and cured, at approximately room temperatures, and contributes in other ways to the foaming and curing reaction. For example, it increases the gelling time, so as to allow a greater degree of foam expansion. The reactive diluent also provides a structural component of the final resin, however, so that its diluent effect of reducing viscosity is not accompanied by a serious deterioration in physical properties of the resulting resin.

The presence of the polydimethylsiloxane reactive diluent reduces the viscosity of the composition, increases the degree of foam expansion during polymerization and curing, at least partly due to its action in retarding the gelling reaction, and also participates to some degree in the condensation polymerization reaction, to give a foamed polymer of low density.

According to the present invention, therefore, there is provided a process for preparing low density, fire-resistant, polyorganosiloxane foams, which comprises mixing together in a mold vessel:
(a) a first organosiloxane polymer of general formula (IV) 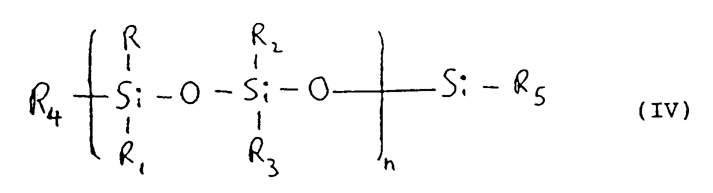 where "n" is an integer from 2 to 100, R, R₁, R₂ and R₃ are independently selected from alkyl groups (C₁-C₄) and phenyl groups, and R₄ and R₅ are independently selected from hydrogen, hydroxy, blocked hydroxy and vinyl, at least some of R₄ and R₅ being vinyl;
(b) a reactive polydimethyl siloxane diluent, of lower viscosity than the aforementioned first organosiloxane polymer, of formula (III) 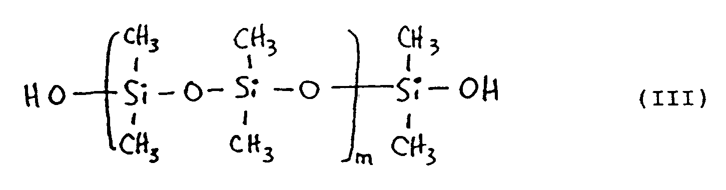 where "m" is an integer suitably chosen to give the desired molecular weight;
(c) a second organosiloxane polymer of general formula (IV) in which R, R₁, R₂, R₃, R₄ and R₅ are independently selected from hydrogen, alkyl groups (C₁-C₄) and phenyl groups, at least some of R₂ representing hydrogen;
(d) an inorganic filler; and
(e) a small amount of water;
   the relative amount of siloxane diluent being from 2-12 parts by weight per 100 parts by weight of total organosiloxane polymers;
   the viscosity of the liquid mixture of components (a), (b) and (d) being within the approximate range of 30-65 Pa.s (30,000 to 65,000 cps);
   forming a substantially homogeneous viscous liquid mixture thereof, allowing the liquid mixture to polymerize under influence of a suitable catalyst of condensation and addition polymerization to form a low density fire resistant foam, and curing the foam so formed.

According to the present invention, there is also provided a process for preparing low density flexible silicone foams of density in the range 80 to 224 kg/m³ (15-14 pcf), which comprises preparing, by mixing at temperatures not exceeding 35°C, a liquid composition comprising:
(1) at least one first, viscous, liquid, uncured organosiloxane polymer having a structure corresponding to the general formula (IIa) 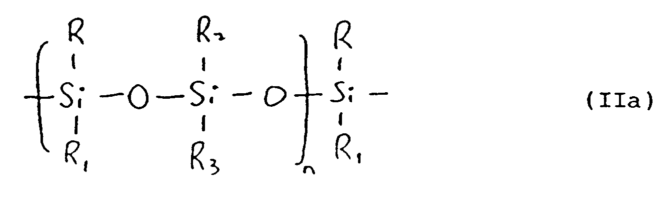 where "n" is an integer of from 2 to 50, R, R₁, R₂ and R₃ are independently selected from C₁₋₄ alkyl groups and phenyl groups, and having vinyl terminal groups;
(2) at least one second, viscous, liquid, uncured organosiloxane polymer having a structure corresponding to the general formula (IIa) above in which R, R₁, R₂ and R₃ are independently selected from hydrogen, C₁₋₄ alkyl groups and phenyl groups, said second polymer having a minor amount of internal Si-H bonding;
(3) from 2 to 12 parts by weight, per 100 parts by total weight of said organosiloxane polymers, of at least one reactive polydimethyl siloxane diluent of viscosity less than that of the polymers and having a molecular weight in the range 1500-2000, the said reactive diluent having hydroxyl functionality of at least 2.5%, substantially free from carbon-carbon unsaturation, and corresponding to the general formula (III) 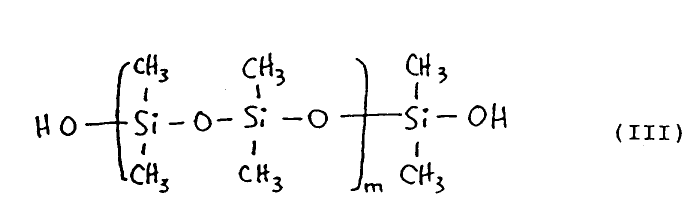 where "m" is an integer suitably chosen to provide a compound of the desired molecular weight;
(4) inorganic filler; and
(5) water;
   the mixture of components (1), (3) and (4) having a viscosity of from 30 to 65 Pa.s (30,000 to 65,000 cps);
   and reacting said composition with a platinum-based catalyst to cause gelling, foaming and curing thereof, and to prepare a low density silicone foam.

The present invention also provides as a novel starting composition a viscous liquid composition suitable for use in preparing low density foam polyorganosiloxanes in the presence of a suitable polymerization catalyst, the composition comprising an A-part and a B-part corresponding to those similarly named parts of the curable mixture described above, the composition also comprising water and being capable of reaction to foam and cure under the action of a platinum-based catalyst.

In one example of such starting compositions, the A-part comprises:
at least one first viscous, liquid, uncured organosiloxane polymer having a structure corresponding to the general formula (IIa) given above and having vinyl terminal groups, where R, R₁, R₂, and R₃ are independently selected from alkyl groups (C₁-C₄) and phenyl groups; and
from 3.5-10 parts by weight, per 100 parts by total weight of part A, of a reactive polydimethyl siloxane diluent of viscosity less than that of the polymers and having a molecular weight in the range 1100-2000, the said reactive diluent having hydroxyl functionality of at least 2.5%, substantially free from carbon-carbon unsaturation, and corresponding to the general formula (III) 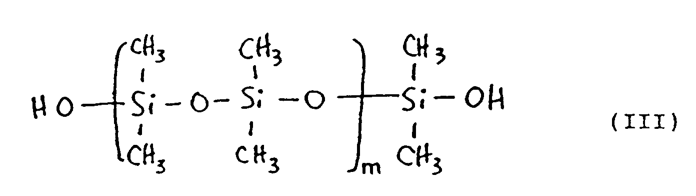
where "m" is an integer suitably chosen to give the desired molecular weight; and water; the composition part A having a viscosity of from 30 to 65 Pa.s (30,000 to 65,000 cps);
and the B-part thereof comprises:
at least one second, viscous, liquid, uncured organosiloxane polymer having a structure corresponding to the general formula (IIa) above in which R, R₁, R₂ and R₃ are independently selected from hydrogen, lower alkyl (C₁-C₄) and phenyl groups, said second polymer having a minor amount of internal Si-H bonding.

In a further example of such starting compositions, the A-part comprises:
at least one first, viscous, liquid, uncured organosiloxane polymer having a structure corresponding to the general formula (IIa) given above where "n" is an integer of from 2 to 50 and R, R₁, R₂ and R₃ are independently selected from C₁₋₄ alkyl groups and phenyl groups, and having vinyl terminal groups;
and from 2-12 parts by weight, per 100 parts by total weight of said organosiloxane polymers, of at least one reactive polydimethyl siloxane diluent of viscosity less than that of the polymers and having a molecular weight in the range of 1500-2000, the said reactive diluent having hydroxyl functionality of at least 2.5%, substantially free from carbon-carbon unsaturation, and corresponding to the general formula (III) given above where "m" is an integer suitably chosen to provide a compound of the desired molecular weight;
and the B-part thereof comprises:
at least one second, viscous, liquid, uncured organosiloxane polymer having a structure corresponding to the general formula (IIa) above in which R, R₁, R₂ and R₃ are independently selected from hydrogen, C₁₋₄ alkyl groups and phenyl groups, said second polymer having a minor amount of internal Si-H bonding;
said composition also comprising:
water and inorganic filler;
the viscosity of the A-part and the filler being from 30 to 65 Pa.s (30,000 to 65,000 cps).

The polymers preferred for use in the present invention are chosen with regard to their chemical composition and structure, to produce a foamable resin mixture of the desired characteristics. For increased flexibility in the resultant foam, it is desirable that the siloxane polymer chains therein should be essentially Linear, and that the degree of cross-linking should be relatively low, even after curing. Excessive cross-linking introduces rigidity. Accordingly, it is preferred that the polymers have an essentially linear structure. Branching in the polymer chains can be present, but any such branches should preferably not contain a functional group. The second organosiloxane polymer, used in minor amount, contains internal Si-H bonds, which will react to create the necessary degree of cross-linking to cure the final foams.

The groups R, R₁, R₂ and R₃ in the first polymer are suitably methyl, ethyl or phenyl. The higher the proportion of methyl groups, apparently, the greater the flexibility of the resultant foam. However, the presence of aryl groups helps to increase the tensile strength of the resultant foam, which is in many cases desirable. A significant contribution to the strength properties of the final foam is made by the ethylenic bonds in the polymer chain formed from the vinyl terminal groups. These ethylenic bonds take the form 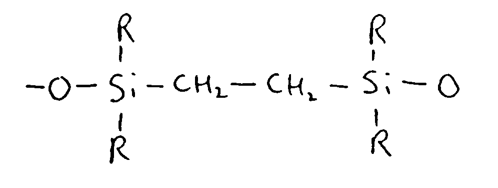
and do not involve oxygen linkages. The ethylene linkages are preferably present in an amount sufficient to enhance the mechanical strength of the final resin, but in small enough amounts not to interfere with the inherent silicone nature or the resin, e.g. fire resistance imparted by the backbone. Accordingly, the ethylenic linkages preferably should not exceed 3% molar of the polymer, but should preferably not be less than 0.5% molar.

One of the significant features of the preferred embodiment of the present invention is the viscosity of the polymer mixture prior to commencing the foaming reaction. Suitable viscosity of the mixture results, in qualitative terms, in a reduction in the resistance to foaming expansion experienced within the resin, so that foaming expansion may proceed to a greater degree and produce foams of lower density. This must, however, be balanced by the factor of desirable physical properties such as tensile strength, tear strength and flexibility, in the resultant foam. Too great a degree of foam expansion would be expected to lead to excessive reduction in final strengths. Moreover, the final foamed resin should be homogeneous in structure and composition. Successful practice of the process of the present invention to produce the novel, exceptionally low density flexible silicone foams hereof depends at least in part upon the appropriate choice of basic polymers, in terms of its chemical composition, viscosity, functionality, vinyl group termination, etc., and appropriate additives for these purposes, especially the siloxane reactive diluent, in suitable amounts. The desired viscosity range is achieved by adding from 2-12 parts by weight, preferably from 3.5-10 parts by weight, per 100 parts by weight of polymers and inorganic fillers, of reactive diluent, so as to provide a "Part A" of the composition, namely the mixture of first organopolysiloxane, reactive diluent and filler, with a viscosity within the range of 30-65 Pa.s (30,000-65,000 cps).

Another important property of the reactive diluent which is added to the basic composition of polymers, filler and water prior to foaming is the resultant increase in the generation of hydrogen as a blowing agent. Experimentation to find the most efficient foam expansion for purposes of the present invention has indicated that best results may be achieved when excess hydrosiloxane (hydrogen-containing second siloxane polymer) reacts with hydroxyl groups from two different sources, namely water and the hydroxyl terminated siloxane reactive diluent, for example such a reactive diluent which has hydroxyl functionality of 2.5-3.2. Such a composition leads to the optimum balance of high foam expansion for reduced density, and good foam structure and properties.

Moreover, the rate of reaction between the hydroxyl groups of the reactive diluent and the silicon-hydrogen groups present in the polymer mixture is relatively slow, in the presence of the platinum-based catalysts used to effect the gelling and curing reactions of the mixture as it foams. This has the effect of reducing the overall rate of the gelling and curing reaction of the mixture, so that the hydrogen generation simultaneously occurring can lead to greater degrees of foam expansion. Once gelling is substantially completed and curing has commenced, further foam expansion of the resin is substantially precluded.

One specific type of suitable first siloxane polymer, with structural groups of general formula (II) above is a high molecular weight liquid polyorganosiloxane, having a high degree of linearity, essentially difunctional, and having vinyl terminal functional groups. Examples of such polymers are shown in U.S.-A-4,189,545 Modic. Such a polymer suitably has a major amount of methyl groups and can have a minor amount of phenyl groups as its R, R₁ etc. side groups, to impart to the final foam appropriate tensile strength and flexibility. Suitable such polymers are known and commercially available. Specific examples are the polymers commercially available from General Electric, compounded with inorganic filler, under the designations RTF-761A and RTF-762A. It is understood that RTF-762A contains water, whereas RTF-761A does not. Second organosiloxane polymers, for use as part B of the mixtures for the present invention, are also commercially available from General Electric, as "curatives", under the designations RTF-761B and RTF-762B.

The compound designated RTF-762A comprises a vinyl-terminated polyorganosiloxane as aforesaid, filled with fire resistant inorganic filler (aluminum, oxide trihydrate, silica powdered quartz, calcium silicate, other metal oxides or the like) in amounts up to about 50 weight percent of polymer, and a proprietary platinum based catalyst. It also contains a small amount of emulsified water. This polymer has an average viscosity at 25°C of around 70 Pa.s (70,000 cps). Mixed with the appropriate amount of reactive diluent, it can constitute "part A" of a composition according to the invention. Then, as "part B" of a foamable composition according to the present invention, there is suitably used a hydrogensiloxane polymer having the appropriate amount of Si-H bonds disposed internally along the siloxane polymer chain as previously described. General Electric resin RTF-762B, referred to in trade literature as a "curing agent" and having a viscosity around 1.2 Pa.s (1200 cps), is a suitable specific example thereof. When such a part A is properly mixed with such a part B, e.g. in a 10:1 weight ratio, the mixture becomes curable and foamable. Foaming and gelling is usually completed in a time of from a few minutes to 1/2 hour, at ambient temperatures. In the absence of the reactive diluent, it produces foams of density 240-320 kg/m³ (15-20 pcf).

Suitable reactive silanol diluents of formula III above, for the present invention, are polymerizable under influence of the same catalysts as the higher viscosity liquid polyorganosiloxane prepolymer. An example of a specific such polydimethylsiloxane silanol terminated reactive diluent is that designated PS-340, marketed by Petrarch Systems Inc. This compound has a specific density of 0.95 g/cm³, suitable molecular weight and a low viscosity at room temperature. It can suitably be used in amounts of 3.5-10 parts by weight, most preferably 4.5-7.5 parts by weight, based on 100 parts of filled higher viscosity polyorganosiloxane (e.g. RTF-762A), part A, and leads to cured, low density silicone foams. A second type of low viscosity silanol having a low kinematic viscosity (15-25 centistokes; 15-25 x 10⁻⁶ m²/s) , suitable hydroxyl functionality (4-6%) and acceptably low molecular weight (400-700), is exemplified by PS-399.7, from Petrarch Systems Inc. It may be used in admixture with PS-340, in amounts to give a hydroxyl functionality to the mixture of at least 2.5.

Thus the reactive diluents for use in the present invention are compatible, from both a physical and chemical point of view, with the basic polymers. They behave as solvents, to reduce the viscosity of the filled basic polymer part A into the desired range, by use of the required small amounts (preferably 4.5-7.5% by weight), so that their presence does not significantly detract from the physical strength properties of the foams derived essentially from the basic polymers. In addition, they are reactive under influence of the same catalysts, in the presence of vinyl siloxane and hydrogen siloxane polymers. In addition, they have relatively short silicone chains to ensure low viscosity and acceptable functionality, so as to delay gelling time and increase foaming ability. Moreover, they are unreactive with vinyl terminated basic polymers, but will incorporate chemically into the foam structure on reaction with the hydrogen siloxane, generating hydrogen for foaming purposes.

As noted above, water is included in the polymer mixture prior to foaming, to increase hydrogen generation during subsequent reaction. The water is suitably used in amounts from 5-12 parts by weight per 100 parts of hydrogen siloxane (second base polymer), preferably from 5-8 parts by weight. Since the water is not compatible with the polymers, it is preferred to emulsify it by high speed mixing with one of the organosiloxane polymers, preferably the vinyl terminated polymer, and add the emulsion so formed. The water should be fully and evenly dispersed throughout the resin mixture, to obtain full enhancement of the foaming characteristics thereby. Lower alkanols, such as methanol, may also be added along with the water, but these are not essential.

The foamable, curable mixtures according to the preferred embodiments of this invention, thus contain vinyl terminated polyorganosiloxanes, Si-H group-containing polyorganosiloxanes, and two sources of reactive hydroxyl groups, namely water and the silanol terminated reactive diluent. The following reactions thus take place during the gelling, foaming and curing processes: 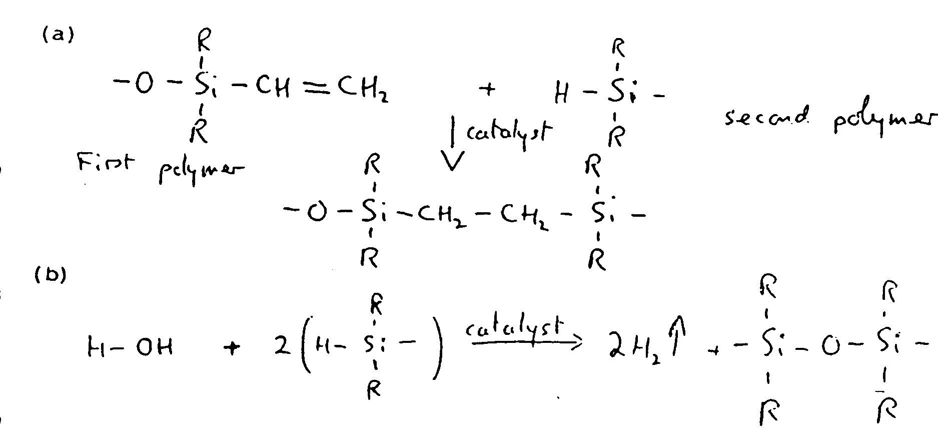 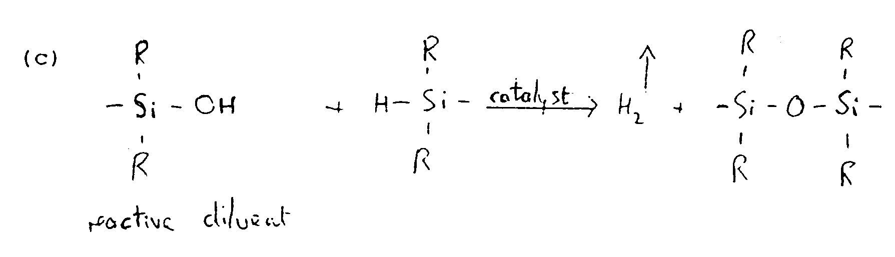
Reaction (a) is the fastest, but generates no gaseous blowing agent. All three reactions proceed simultaneously to give a cured, foamed product incorporating all of the above reaction products. Reaction (b) generates the greatest amount of gaseous blowing reagent for foaming purposes. Reaction (c), involving the reactive diluent, also generates gaseous blowing agent, with the reactive diluent incorporating into the cured resin structure. It is a feature of the preferred aspects of the present invention that hydroxyl groups for the gelling, foaming and curing reactions are derived from both water and the reactive diluent silanol, in molar quantities of for example 85-95% from water and for example 5-15% from silanol, so that these three reactions may proceed in proper balance with one another to produce the foamed resins of the present invention. Otherwise, foams of the prescribed low density and high physical properties are not obtained.

The viscosity values reported herein are as measured at ambient temperatures (c25°C). The required viscosities in the foamable mixtures are obtained by mixing the ingredients at room temperatures.

The compositions according to the invention also preferably include inorganic fillers to enhance the fire resistance of the final flexible foams, or for coloring. The suitable fillers are incorporated into the polymer mixture before polymerization and foaming is commenced. Appropriate such fillers include alumina and hydrates thereof, silica, calcium silicate, manganese oxides and iron oxides, as known in the prior art. The filler is suitably present in amounts from about 35-50 parts by weight in 100 parts by weight of total polymers, and is thoroughly dispersed in the mixture.

Other additives which may be included in the polymerizable mixture include nucleation agents to assist in foam formation. These materials, which are known in the art, include ultra fine fumed silica gel, finely ground graphite or titanium dioxide and are used in very small amounts.

The process of preparing the foams of the present invention involves the formation of a substantially homogeneous mixture of the ingredients, including catalyst and foaming polymerization thereof at temperatures preferably in the 18-35°C range. Care should be taken to ensure that the temperature during mixing does not exceed 35°C, or premature gelling and curing may occur. Normally, room temperature polymerization is satisfactory. The polymerization may take place in a mold vessel, providing adequate space for foam expansion. Alternatively, the mixture may be formed in a spray head and spray applied to a supporting surface, to allow foaming polymerization thereon into slabs or sheets of the desired thickness. It is an advantageous feature of the process of the present invention that the foaming reaction takes place without supply of external heating or cooling, on mixing the ingredients at ambient, room temperatures. The only supplied heat is derived from the mixing together of the ingredients, or the chemical reaction. The foam is then cured, to a non-tacky, flexible condition. Curing may take place at room temperature, merely by allowing the foam to stand for an appropriate period of time after foaming in covered molds. The curing process may, if desired, be accelerated by warming the foam. It is preferred to allow at least the initial curing to proceed at room temperature, or at any rate below 35°C, to improve the homogeneity of the foam. After about 30 minutes curing at room temperatures, the cure is advantageously completed at slightly elevated temperatures (50-70°C) for about 2 hours. Complete curing at room temperatures, to produce a tack free product may take about 72 hours.

Preferred foams according to the invention have sufficient fire resistance to pass standard oil burner tests for flammability. Fumes and smoke therefrom are substantially non-toxic, sufficient to pass Boeing test BSS 7239 for toxicity and London Underground test for smoke emission.

The invention is further illustrated in the following specific examples. Unless otherwise stated, all ingredients are listed in parts by weight.

### Example 1

The following three ingredients were thoroughly mixed together in an open-topped vessel, to form a homogeneous viscous liquid mix:

| Part A: - | |
|---|---|
| Silicone filled polymer mix RTF-761A, containing proprietary platinum based catalyst (also designated RTV 285-1233A) from General Electric | 92.5 parts |
| Low viscosity polydimethylsiloxane silanol PS 340 | 7.5 parts |
| Aqueous methanol (alcohol:water 1:1) | 1.0 parts |

Then, as Part B, 10 parts of hydrogen-containing siloxane polymer, RTF-761B from General Electric, was thoroughly mixed in. The mixture was poured into an open mold and allowed to foam and gel at ambient temperature (about 25°C). The gelling time was about 26-28 minutes. A sample was placed in an oven at 60°C and cured for 30 minutes. There was produced a flexible, resilient, soft silicone foam, of density 166.4 kg/m³ (10.4 pcf), tensile strength 86.90 kPa (12.5-13 psi) and flame spread index of 21. The foam had a homogeneous structure, with medium-small size cells.

### Example 2

In this example, the foam was produced on a semi-industrial scale, to produce a cured sample of size 60 cm x 55 cm x 14 cm (24" x 22" x 5.5"). The following formulation was used:

| Part A: - | |
|---|---|
| RTF-762A (General Electric) | 94.0 parts |
| PS 340 | 4.8 parts |
| PS 339.7 | 1.2 parts |

| Part B: - | |
|---|---|
| Modified RTF-762B containing 8% water | 13.0 parts |

The ingredients were blended with an electric hand mixer, the temperature being thereby raised to about 33°C. The components of the reactive diluent, PS 340 and PS 339.7 from Petrarch, were pre-mixed in the above 4:1 ratio, giving an average hydroxyl functionality of about 3%. The water component of RTF-762B was emulsified therein.

The cured, foamable mixture was gelled in a covered, insulated mold, over a period of about 18 minutes. Then the mold was opened and placed in an oven at 60-70°C for 15 minutes to cure the foam. The resultant flexible foam had good cell structure and a density of 80-83.2 kg/m³ (5-5.2 pcf).

### Example 3

A laboratory foam sample was made by the procedure of Example 1 from the following formulation:

| | |
|---|---|
| RTF-762A | 93.5 parts |
| PS 340 | 6.5 parts |
| RTF-762B containing 5% water | 14.0 parts |

The first two items were mixed and warmed in an oven to 31°C. Then the RTF-762B containing water was added and rapidly blended in. The mixture was poured into an insulated paper mold and covered. The mold was left at ambient temperature and gelling occurred in 13-14 minutes. The foam was cured in the oven at 50°C for 25 minutes. The resultant cured flexible foam had a density of 123.2 kg/m³ (7.7 pcf) and good structure.

### Example 4

Silicone foams, according to the invention, were prepared on a laboratory scale from polymers RTF-761A and B, and and RTF-762A and B, described previously, with various amounts of reactive diluent PS-340 and appropriate catalysts. No additional inorganic filler was used, other than that contained in the polymers as commercially obtained. In these laboratory preparations, the resin compositions were mixed together in a cardboard, open-topped container of about 250 ml capacity, stirring with a wooden stirrer to form a homogeneous mixture. Then they were poured into paper molds and allowed to foam and cure, to produce foam samples of size about 3.3-5.7 x 10⁻⁴ m³ (20-35 cubic inches).

Further samples were prepared similarly, but on a semi-industrial scale, by mixing the ingredients in a vessel with a mechanical hand mixer and then pouring into a mold to cure and form foam samples of size 35.3-60.5 cm by 35.3-60.5 cm by 10-15 cm (14-24 inches by 14-24 inches by 4-6 inches).

Further such samples were prepared similarly, but on an industrial scale, producing foam slabs of size 90.7 cm x 181 cm x 15 cm thick (3 feet x 6 feet x 6 inches thick). In the industrial preparations, automatic air-excluding mixes were used to prepare the foamable compositions, to a high degree or homogeneity, with automatic ingredient proportioning and pouring into the the shallow slab molds.

The conditions and results are given below in Table 1.

**TABLE 1**

| Silicone Prepolymer | | Reactive Diluent | | Curative Part B | | Foam Density Achieved kg/m³ (pcf) | | |
|---|---|---|---|---|---|---|---|---|
| Designation | Parts by wt | Designation | Parts by wt | Designation | Parts by wt | Lab | Semi-Indust. | Industrial |
| RTF-761 | 95 | PS-340 | 5 | 761 B | 10 | 136-144 (8.5-9.0) | 124.8-134.4 (7.8-8.4) | 115.2-121.6 (7.2-7.6) |
| RTF-762 | 94 | PS-340 | 6 | 762 B | 11 | 126.4-147.2 (7.9-9.2) | 104-112 (6.5-7.0) | 100.8-112 (6.3-7.0) |
| RTF-762 | 93 | PS-340 | 7 | 762 B | 12 | 121.6-137.6 (7.6-8.6) | 83.2-94.4 (5.2-5.9) | - |

The above figures are derived from several repeated samples. Some variation in composition and performance is noted between batches of the same commercially available resins.

### Example 5

Foams were prepared in accordance with the present invention from the commercially available RTF-761A and B, and RTF-762A and B, organosiloxane prepolymers, and reactive diluent PS-340 previously described. Manufacturers' recommended proprietary catalysts for the respective prepolymers were used. Small amounts of water were included in each foaming formulation
- prepolymer RTF-762A contains a little water in its composition whereas RTF-761 does not. However, the curative 761-B, used with resin RTF-761A, includes a small amount of water.
Accordingly, each of the formulations contained about 8 parts of water per 100 parts by weight of curative Part B. Mixing, foaming and curing took place in an open-topped vessel, and the viscosity of the mixture was measured after homogeneous mixing, but before addition of the catalyst to cause foaming.

The formulations and results are given below in Table 2. It is to be noted that the reported properties of viscosity and density are averages of several formulations, since minor variations were encountered between specific prepolymer batches and reactive diluent batches.

**TABLE 2**

| A-part-Vinyl Terminated Siloxane Polymer with filler | | eactive Diluent | B-part-Hydrogen Containing Siloxane Polymer (Curing Agent) | | Viscosity of Mix at 25°C (76°F) Pa.s(cps) | Foam Density Kg/m³ pounds per cu. ft) |
|---|---|---|---|---|---|---|
| Designation | Amount (parts by wt) | Amount (parts by wt) | Designation | Amount (parts by wt) | | |
| RTF-761 | 100 | - | 761 B | 10 | c.70.0 (c.70,000) | 312-320 (19.5-20) |
| RTF-761 | 96.5 | 3.5 | 761 B | 10 | 59.4 (59,400) | 232 (14.5) |
| RTF-761 | 95.0 | 5.0 | 761 B | 10 | 53.0 (53,000) | 136-144 (8.5-9.0) |
| RTF-761 | 92.5 | 7.5 | 761 B | 10 | 56.0 (56,000) | 160 (10.0) |
| RTF-761 | 90.0 | 10.0 | 761 B | 10 | 58.0 (58,000) | 168 (10.5) |
| RTF-762 | 100 | - | 762 B | 11 | 69.6 (69,600) | 264-288 (16.5-18) |
| RTF-762 | 96.25 | 3.75 | 762 B | 11 | 52.2 (52,200) | 184 (11.5) |
| RTF-762 | 96 | 4.0 | 762 B | 11 | 50.4 (50,400) | 156.8 (9.8) |
| RTF-762 | 95 | 5.0 | 762 B | 11 | 47.5 (47,500) | 145.6 (9.1) |
| RTF-762 | 94 | 6.0 | 762 B | 11 | 47.2 (47,200) | 136 (8.5) |
| RTF-762 | 93.5 | 6.5 | 762 B | 11 | 48.9 (48,900) | 129.6 (8.1) |
| RTF-762 | 93 | 7.0 | 762 B | 11 | 48.2 (48,200) | 120 (7.5) |
| RTF-762 | 92.5 | 7.5 | 762 B | 11 | 48.0 (48,000) | 115.2 (7.2) |

The viscosity measurements reported in Table 2 were actually made on the mixture of A-part and reactive diluent, but the addition of the B-part makes no significant difference to the viscosity of the foamable mixture.

It will be noted, in general, that the lower the viscosity of the part A-reactive diluent mixture, the lower the density of the resultant foam. There are, however, significant variations between batches of polymers, and experimentation may be necessary with each polymer batch to find the optimum viscosity and formulation for preparing the best foam.

## Claims (Claims for the following Contracting State(s): BE, CH, LI, DE, FR, GB, IT, LU, NL, SE)

1. A process for preparing a cured, flexible, fire resistant silicone foam composition of density less than 224 kg/m³, said composition comprising:
a polyorganosiloxane having a backbone polymeric structure containing a major proportion of the silicone structural unit general formula (II) 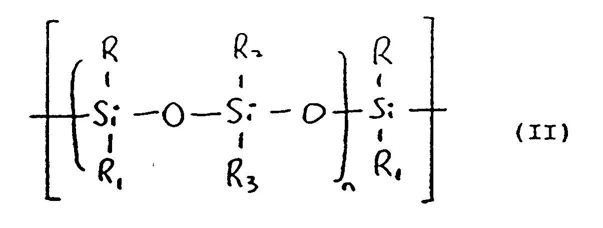 wherein each R, R₁, R₂ and R₃ may be the same or different, and is independently selected from C₁-C₄ alkyl groups and aryl groups, "n" is an integer from 2 to 100, and having a minor proportion of the ethylenic structural unit (̵CH₂-CH₂)̵ linking the above silicone structural units;
which process comprises:
foaming and curing a multi-component liquid polymer mixture comprising,
as part A, a vinyl-terminated polyorganosiloxane and a polydimethyl silanol terminated reactive diluent, the reactive diluent being of lower viscosity than the aforementioned vinyl-terminated polyorganosiloxane and of molecular weight from 400 to 2000, and
as Part B, a second polyorganosiloxane which has hydrogen groups directly bonded to silicon in non-terminal positions along the siloxane chain,
in the presence of water and
a platinum-based catalyst,
the reactants and conditions being such that a composition as defined above is thereby formed.

2. A process according to claim 1, wherein an inorganic filler is also present in the reaction mixture.

3. A process according to claim 1 or claim 2, wherein the base organosiloxane polymers comprised in part A of the mixture contain vinyl terminal groups and have a basic structure corresponding to the general formula (IIa) 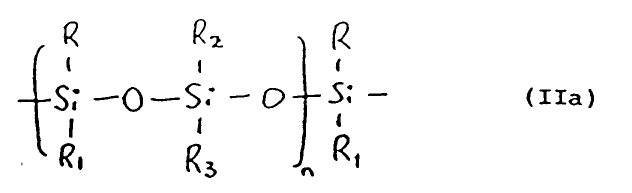 where "n" is an integer from 2 to 100 and R, R₁, R₂ and R₃ are independently selected from C₁₋₄ alkyl groups and phenyl groups.

4. A process according to any one of claims 1 to 3, wherein the reactive diluent has a hydroxyl functionality of at least 2.5%.

5. A process according to any one of claims 1 to 5, wherein an inorganic filler is present in the reaction mixture and the reactive diluent is used in amounts of from 2 to 12 parts by weight, per 100 parts by combined weight of vinyl terminated polyorganosiloxane and inorganic filler.

6. A process according to any one of claims 1 to 5, wherein the relative amounts of water and reactive diluent in the total mixture are selected so that, in the foaming mixture, from 5 to 15% of the hydroxyl groups, on a molar basis, are contributed by the silanol reactive diluent and from 95 to 85% are contributed by the water.

7. A process according to claim 2, wherein:
(a) the vinyl terminated polyorganosiloxane is an organosiloxane polymer of general formula (IV) 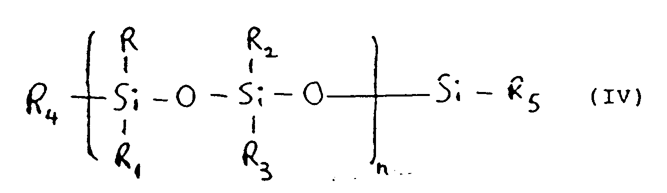 where "n" is an integer of from 2 to 100, R, R₁, R₂ and R₃ are independently selected from C₁₋₄ alkyl groups and phenyl groups, and R₄ and R₅ are independently selected from hydrogen, hydroxy, blocked hydroxy and vinyl, at least some of R₄ and R₅ being vinyl;
(b) the reactive diluent is a polydimethyl silanol terminated reactive diluent, of lower viscosity than the vinyl-terminated polyorganosiloxane present from (a) above, the reactive diluent having formula (III) 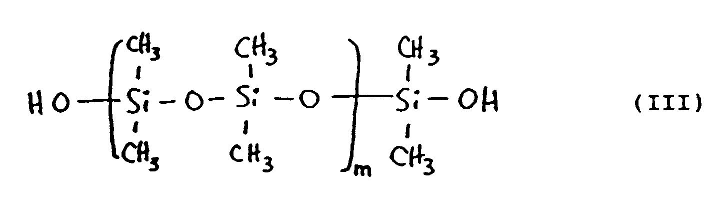 where "m" is an integer suitably chosen to give the desired molecular weight;
(c) the second polyorganosiloxane is an organosiloxane polymer of general formula (IV) in which R, R₁, R₂, R₃, R₄ and R₅ are independently selected from hydrogen, C₁₋₄ alkyl groups and phenyl groups, at least some of R₂ representing hydrogen;
the relative amount of siloxane diluent being from 2-12 parts by weight per 100 parts by weight of total organosiloxane polymers;
the viscosity of the liquid mixture of components (a), (b) and the inorganic filler being within the range of 30 to 65 Pa.s; and
(d) the process is carried out by mixing components (a), (b), (c), the water and the inorganic filler together in a mold vessel to form a substantially homogeneous liquid mixture thereof, allowing the liquid mixture to polymerize under influence of a suitable catalyst of condensation and addition polymerization to form a low density fire resistant foam, and curing the foam so formed.

8. A process according to claim 2, wherein:
(1) the vinyl terminated polyorganosiloxane is at least one liquid, uncured organosiloxane polymer having a structure corresponding to the general formula (IIa) 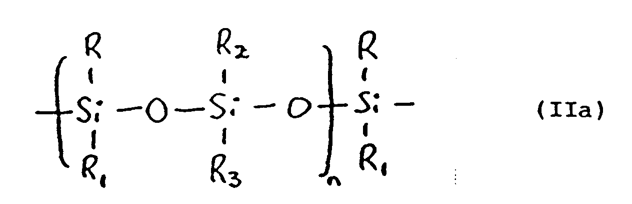 where "n" is an integer of from 2 to 50, R, R₁, R₂ and R₃ are independently selected from C₁₋₄ alkyl groups and phenyl groups, and having vinyl terminal groups;
(2) the second polyorganosiloxane is at least one liquid, uncured organosiloxane polymer having a structure corresponding to the general formula (IIa) above in which R, R₁, R₂ and R₃ are independently selected from hydrogen, C₁₋₄ alkyl groups and phenyl groups, said second polymer having internal Si-H bonding;
(3) the reactive diluent is from 2 to 12 parts by weight, per 100 parts by total weight of said organosiloxane polymers, of at least one reactive polydimethyl siloxane diluent of viscosity less than that of the polymers and having a molecular weight in the range 1500-2000, having hydroxyl functionality of at least 2.5%, substantially free from carbon-carbon unsaturation, and corresponding to the general formula (III) 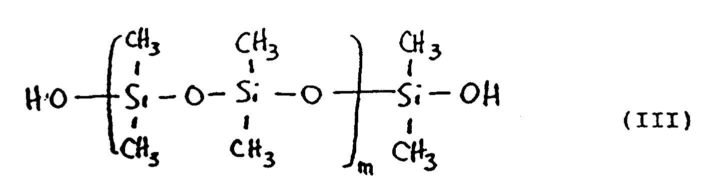 where "m" is an integer suitably chosen to provide a compound of the desired molecular weight,
the mixture of components (1), (3) and the inorganic filler having a viscosity of from 30 to 65 Pa.s; and
(4) the process is carried out by mixing components (1), (2), (3), the water and the inorganic filler at temperatures not exceeding 35°C to form a liquid composition and reacting said composition with a platinum-based catalyst to cause gelling, foaming and curing thereof, to prepare a flexible silicone foam of density in the range 80 to 224 kg/m³.

9. A process according to claim 7 or claim 8, wherein the groups R, R₁, R₂ and R₃ in the first organosiloxane polymer are selected from methyl, ethyl and phenyl.

10. A process according to any one of claims 7 to 9, wherein the groups R, R₁, R₂ and R₃ in the second organosiloxane polymer are selected from hydrogen, methyl, ethyl and phenyl.

11. A process according to any one of claims 7 to 10, wherein the first organosiloxane polymer is present in the composition in weight excess over the second organosiloxane polymer.

12. A process according to claim 11, wherein the organosiloxane polymer mixture contains a molar excess of Si-H bond over vinyl bonds.

13. A process according to any one of claims 7 to 12, wherein the composition includes 3.5-10 parts by weight of said reactive diluent per 100 parts by total weight of said organosiloxane polymers.

14. Low density foamed polyorganosiloxanes when prepared by a process according to any one of claims 1 to 13.

15. Foamed polyorganosiloxanes according to claim 14, wherein the inorganic filler, when present, is substantially homogeneously dispersed therein.

16. Foamed polyorganosiloxanes according to claim 15, wherein the inorganic filler is present in an amount of from 35-100 parts by weight per 100 parts by weight of first organosiloxane polymers.

17. Foamed polyorganosiloxanes according to any one of claims 14 to 16, having a density of 64 to 176 kg/m³.

18. A composition suitable for use in preparing low density foamed polyorganosiloxanes according to any one of claims 14 to 17, comprising an A-part and a B-part, the A-part including a vinyl-terminated polyorganosiloxane and a polydimethyl silanol terminated reactive diluent, the reactive diluent being of lower viscosity than the aforementioned vinyl-terminated polyorganosiloxane and of molecular weight from 400 to 2000, and the B-part including a second polyorganosiloxane which has hydrogen groups directly bonded to silicon in non-terminal positions along the silicon chain, the composition also comprising water and being capable of reaction to foam and cure under the action of a platinum-based catalyst.

19. Use of water and a polydimethyl silanol terminated reactive diluent of molecular weight from 400 to 2000 for providing simultaneous different sources of hydroxyl groups in the catalysed foaming of a polyorganosiloxane mixture including a vinyl terminated first polyorganosiloxane, of higher viscosity than the reactive diluent, and a second polyorganosiloxane which has hydrogen groups directly bonded to silicon in non-terminal positions along the siloxane chain, in order to prepare a cured, flexible, fire resistant silicone foam composition of density less than 224 kg/m³ comprising a polyorganosiloxane having a backbone polymeric structure containing a major proportion (as herein defined) of the silicone structural unit general formula (II) 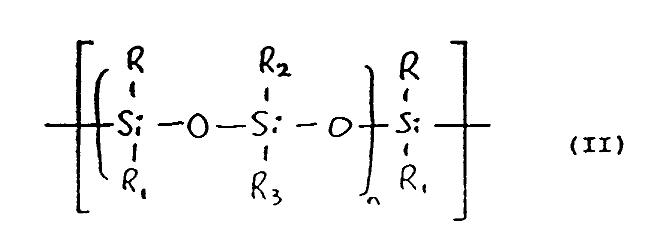 wherein each R, R₁, R₂ and R₃ may be the same or different, and is independently selected from C₁₋₄ alkyl groups and aryl groups, "n" is an integer of from 2 to 100, and having a minor Proportion (as herein defined) of the ethylenic structural unit (̵CH₂-CH₂)̵ linking the above silicone structural units.

## Claims (Claims for the following Contracting State(s): AT)

1. A process for preparing a cured, flexible, fire resistant silicone foam composition of density less than 224 kg/m³, said composition comprising:
a polyorganosiloxane having a backbone polymeric structure containing a major proportion (as herein defined) of the silicone structural unit general formula (II) 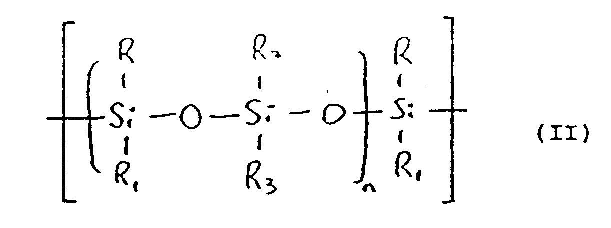 wherein each R, R₁, R₂ and R₃ may be the same or different, and is independently selected from C₁-C₄ alkyl groups and aryl groups, "n" is an integer from 2 to 100, and having a minor proportion (as herein defined) of the ethylenic structural unit (̵CH₂-CH₂)̵ linking the above silicone structural units;
which process comprises:
foaming and curing a multi-component liquid polymer mixture comprising, as part A, a vinyl-terminated polyorganosiloxane and a polydimethyl silanol terminated reactive diluent, the reactive diluent being of lower viscosity than the aforementioned vinyl-terminated polyorganosiloxane and of molecular weight from 400 to 2000, and as Part B, a second polyorganosiloxane which has hydrogen groups directly bonded to silicon in non-terminal positions along the siloxane chain, in the presence of water and a platinum-based catalyst, the reactants and conditions being such that a composition as defined above is thereby formed.

2. A process according to claim 1, wherein an inorganic filler is also present in the reaction mixture.

3. A process according to claim 1 or claim 2, wherein the base organosiloxane polymers comprised in part A of the mixture contain vinyl terminal groups and have a basic structure corresponding to the general formula (IIa) 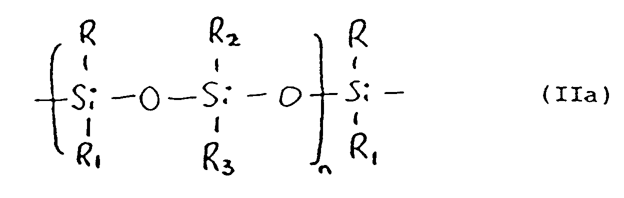 where "n" is an integer from 2 to 100 and R, R₁, R₂ and R₃ are independently selected from C₁₋₄ alkyl groups and phenyl groups.

4. A process according to any one of claims 1 to 3, wherein the reactive diluent has a hydroxyl functionality of at least 2.5%.

5. A process according to any one of claims 1 to 4, wherein an inorganic filler is present in the reaction mixture and the reactive diluent is used in amounts of from 2 to 12 parts by weight, per 100 parts by combined weight of vinyl terminated polyorganosiloxane and inorganic filler.

6. A process according to any one of claims 1 to 5, wherein the relative amounts of water and reactive diluent in the total mixture are selected so that, in the foaming mixture, from 5 to 15% of the hydroxyl groups, on a molar basis, are contributed by the silanol reactive diluent and from 95 to 85% are contributed by the water.

7. A process according to claim 2, wherein:
(a) the vinyl terminated polyorganosiloxane is an organosiloxane polymer of general formula (IV) 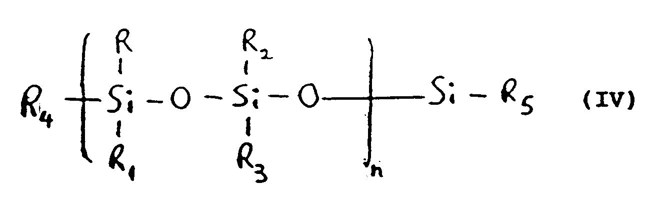 where "n" is an integer from 2 to 100, R, R₁, R₂ and R₃ are independently selected from C₁₋₄ alkyl groups and phenyl groups, and R₄ and R₅ are independently selected from hydrogen, hydroxy, blocked hydroxy and vinyl, at least some of R₄ and R₅ being vinyl;
(b) the reactive diluent is a polydimethyl silanol terminated reactive diluent, of lower viscosity than the vinyl-terminated polyorganosiloxane present from (a) above, the reactive diluent having formula (III) 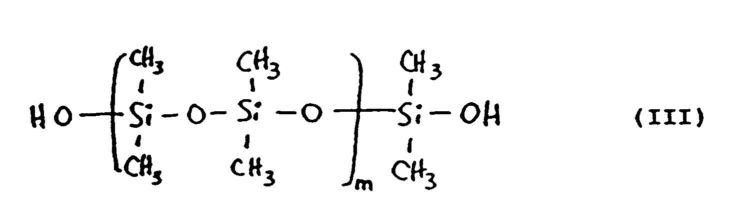 where "m" is an integer suitably chosen to give the desired molecular weight;
(c) the second polyorganosiloxane is an organosiloxane polymer of general formula (IV) in which R, R₁, R₂, R₃, R₄ and R₅ are independently selected from hydrogen, C₁₋₄ alkyl groups and phenyl groups, at least some of R₂ representing hydrogen;
the relative amount of siloxane diluent being from about 2-12 parts by weight per 100 parts by weight of total organosiloxane polymers;
the viscosity of the liquid mixture of components (a), (b) and the inorganic filler being within the range of 30 to 65 Pa.s; and
(d) the process is carried out by mixing components (a), (b), (c), the water and the inorganic filler together in a mold vessel to form a substantially homogeneous liquid mixture thereof, allowing the liquid mixture to polymerize under influence of a suitable catalyst of condensation and addition polymerization to form a low density fire resistant foam, and curing the foam so formed.

8. A process according to claim 2, wherein:
(1) the vinyl terminated polyorganosiloxane is at least one liquid, uncured organosiloxane polymer having a structure corresponding to the general formula (IIa) 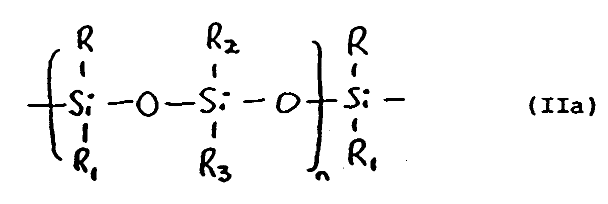 where "n" is an integer of from 2 to 50, R, R₁, R₂ and R₃ are independently selected from C₁₋₄ alkyl groups and phenyl groups, and having vinyl terminal groups;
(2) the second polyorganosiloxane is at least one liquid, uncured organosiloxane polymer having a structure corresponding to the general formula (IIa) above in which R, R₁, R₂ and R₃ are independently selected from hydrogen, C₁₋₄ alkyl groups and phenyl groups, said second polymer having internal Si-H bonding;
(3) the reactive diluent is from 2 to 12 parts by weight, per 100 parts by total weight of said organosiloxane polymers, of at least one reactive polydimethyl siloxane diluent of viscosity less than that of the polymers and having a molecular weight in the range 1500-2000, having hydroxyl functionality of at least 2.5%, substantially free from carbon-carbon unsaturation, and corresponding to the general formula (III) 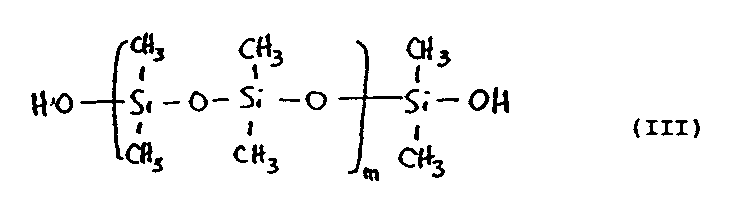 where "m" is an integer suitably chosen to provide a compound of the desired molecular weight,
the mixture of components (1), (3) and the inorganic filler having a viscosity of from 30 to 65 Pa.s; and
(4) the process is carried out by mixing components (1), (2), (3), the water and the inorganic filler at temperatures not exceeding 35°C to form a liquid composition and reacting said composition with a platinum-based catalyst to cause gelling, foaming and curing thereof, to prepare a flexible silicone foam of density in the range 80 to 224 kg/m³.

9. A process according to claim 7 or claim 8, wherein the groups R, R₁, R₂ and R₃ in the first organosiloxane polymer are selected from methyl, ethyl and phenyl.

10. A process according to any one of claims 7 to 9, wherein the groups R, R₁, R₂ and R₃ in the second organosiloxane polymer are selected from hydrogen, methyl, ethyl and phenyl.

11. A process according to any one of claims 7 to 10, wherein the first organosiloxane polymer is present in the composition in weight excess over the second organosiloxane polymer.

12. A process according to claim 11, wherein the organosiloxane polymer mixture contains a molar excess of Si-H bond over vinyl bonds.

13. A process according to any one of claims 7 to 12, wherein the composition includes 3.5-10 parts by weight of said reactive diluent per 100 parts by total weight of said organosiloxane polymers.

14. Use of water and a polydimethyl silanol terminated reactive diluent of molecular weight from 400 to 2000 for providing simultaneous different sources of hydroxyl groups in the catalysed foaming of a polyorganosiloxane mixture including a vinyl-terminated first polyorganosiloxane, of higher viscosity than the reactive diluent, and a second polyorganosiloxane which has hydrogen groups directly bonded to silicon in non-terminal positions along the siloxane chain, in order to prepare a cured, flexible, fire resistant silicone foam composition of density less than 224 kg/m³ comprising a polyorganosiloxane having a backbone polymeric structure containing a major proportion (as herein defined) of the silicone structural unit general formula (II) 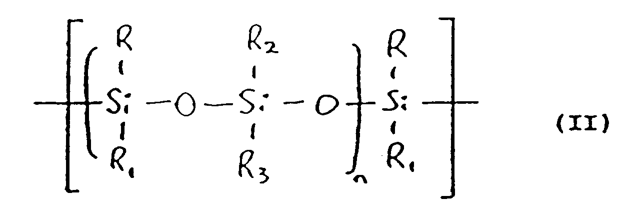 wherein each R, R₁, R₂ and R₃ may be the same or different, and is independently selected from c₁₋₄ alkyl groups and aryl groups, "n" is an integer from 2 to 100, and having a minor proportion (as herein defined) of the ethylenic structural unit (̵CH₂-CH₂)̵ linking the above silicone structural units.

## Patentansprüche (Patentansprüche für folgende(n) Vertragsstaat(en): BE, CH, LI, DE, FR, GB, IT, LU, NL, SE)

1. Verfahren zur Herstellung einer gehärteten, flexiblen, feuerfesten Silikonschaumzusammensetzung mit einer Dichte von weniger als 224 kg/m³, umfassend:
ein Polyorganosiloxan mit einer polymeren Grundstruktur, die einen überwiegenden Teil der allgemeinen Formel (II) der Silikonstruktureinheit enthält: 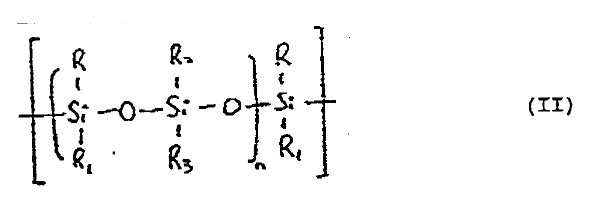 worin jedes R, R₁, R₂, und R₃ gleich oder unterschiedlich sein kann, und in unabhängiger Weise aus Alkyl- und Arylgruppen mit 1 bis 4 Kohlenstoffatomen ausgewählt ist, worin "n" eine ganze Zahl zwischen von 2 bis 100 ist, und wobei ein geringer Teil der ethylenischen Struktureinheit (CH₂-CH₂) die obigen Silikonstruktureinheiten verbindet,
welches Verfahren die folgenden Schritte umfasst:
Schäumen und Härten, in Gegenwart von Wasser, einer flüssigen Mehrkomponenten-Polymermischung, aus:
- als Teil A, ein vinylendendes Polyorganosiloxan und ein polydimethylsilanolendender reaktiver Verdünner, wobei der reaktive Verdünner geringere Viskosität als das zuvor erwähnte vinylendende Polysiloxan und ein Molekulargewicht von 400 bis 2000 aufweist, und,
- als Teil B, ein zweites Polyorganosiloxan welches entlang der Siloxankette in nicht endender Position direkt and das Silikon gebundene Wasserstoffgruppen aufweist, und
- ein Katalysator auf Platinbasis,
wobei die Reaktionsteilnehmer und Zustände derart sind, dass eine Zusammensetung wie oben definiert, erhalten wird.

2. Verfahren nach Anspruch 1, in dem auch ein anorganischer Füller in der Reaktionsmischung vorhanden ist.

3. Verfahren nach Anspruch 1 oder 2, in dem die in Teil A der Mischung enthaltenen grundlegenden Organosiloxanpolymere Vinylendgruppen enthalten, und eine Grundstruktur entsprechend der folgenden Formel (IIa) aufweisen: 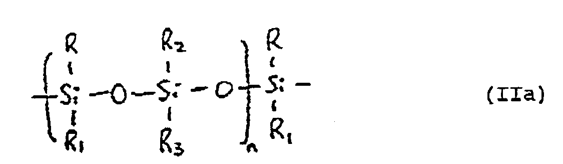 worin "n" eine ganze Zahl von 2 bis 100 und R, R₁, R₂ und R₃ in unabhängiger Weise aus Phenylgruppen mit 1-4 Kohlenstoffatomen ausgewählt sind.

4. Verfahren nach irgendeinem der Ansprüche 1 bis 3, in dem der reaktive Verdünner eine Hydroxylfunktionalität von zumindest 2,5% aufweist.

5. Verfahren nach irgendeinem der Ansprüche 1 bis 4, in dem ein anorganischer Füller in der Reaktionsmischung vorhanden ist und der reaktive Verdünner in einer Menge von 2 bis 12 Gewichtsteilen, bezogen auf 100 Teile des Gesamtgewichts von vinylendendem Polyorganosiloxan und inorganischem Füller, verwendet wird.

6. Verfahren nach irgendeinem der Ansprüche 1 bis 5, in dem die relativen Mengen von Wasser und reaktivem Verdünner in der Gesamtmischung derart gewählt sind, dass in der schäumenden Mischung 5 bis 15% der Hydroxylgruppen, auf molarer Basis, vom reaktiven Silanolverdünner, und 95 bis 85 % von Wasser beigesteuert werden.

7. Verfahren nach Anspruch 2, wobei:
(a) das vinylendende Polyorganosiloxan ein Organosiloxanpolymer der allgemeinen Formel (IV) ist 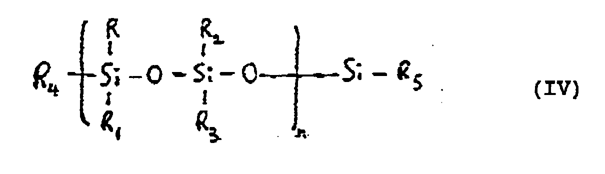 worin "n" eine ganze Zahl von 2 bis 100 ist und R, R₁, R₂ und R₃ in unabhängiger Weise aus Alkyl- und Phenylgruppen mit 1 bis 4 Kohlenstoffatomen, und R₄ und R₅ in unabhängiger Weise aus Wasserstoff, Hydroxyl, blockiertem Hydroxyl und Vinyl ausgewählt sind, wobei zumindest einige der R₄ und R₅ Vinyl sind;
(b) der reaktive Verdünner ein polydimethylsilanolendender reaktiver Verdünner ist, mit geringerer Viskosität als die des vinylendenden Polyorganosiloxans aus obigem (a), wobei der reaktive Verdünner der Formel (III) entspricht 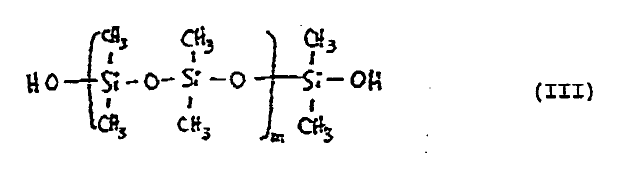 wobei "m" eine ganze Zahl ist, welche passend gewählt ist um das gewünschte Molekulargewicht zu erreichen;
(c) das zweite Polyorganosiloxan ein Organosiloxanpolymer der allgemeinen Formel (IV) ist, in der R, R₁, R_{2,} R₃, R_{4,} und R₅ in unabhängiger Weise aus Wasserstoff, und Alkyl- und Phenylgruppen mit 1 bis 4 Kohlenstoffatomen ausgewählt sind, wobei zumindest einige der R₂ Wasserstoff sind;
wobei die relative Menge an Siloxanverdünner von 2 bis 12 Gewichtsteilen, bezogen auf 100 Gewichtsteile des gesamten Organosiloxans beträgt;
wobei die Viskosität der flüssigen Mischung der Komponenten (a), (b) und (c) und des inorganischen Füllers im Bereich von 30 bis 65 Pa.s liegt, und
(d) das Verfahren durchgeführt wird in dem die Komponenten (a), (b) und (c), Wasser und der inorganische Füller in einem Formbehälter zusammengemischt werden, um eine in wesentlichen homogene Mischung hiervon zu formen, der flüssigen Mischung in Gegenwart eines passenden Katalysators für eine Kondensations- und Additionspolymerisation erlaubt wird zu polymerisieren um einen feuerfesten Schaum geringer Dichte zu erzeugen, und Härten des derart erzeugten Schaums.

8. Verfahren nach Anspruch 2, worin:
(1) das vinylendende Polyorganosiloxan zumindest ein flüssiges ungehärtetes Organosiloxanpolymer ist, mit einer struktur, die der allgemeinen Formel (IIa) entspricht 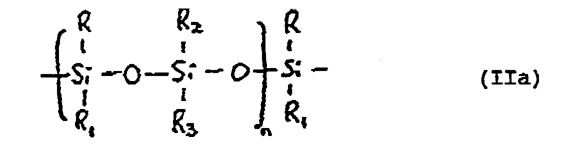 worin "n" eine ganze Zahl von 2 bis 50 ist und R, R₁, R₂ und R₃ in unabhängiger Weise aus Alkyl- und Phenylgruppen mit 1 bis 4 Kohlenstoffatomen ausgewählt sind, und Vinylendgruppen aufweisen;
(2) das zweite Polyorganosiloxan zumindest ein flüssiges, ungehärtetes Organosiloxanpolymer ist mit einer Struktur, die der obigen allgemeinen Formel (IIa) entspricht, worin R, R₁, R₂ und R₃ in unabhängiger Weise aus Wasserstoff und Alkyl- und Phenylgruppen mit 1 bis 4 Kohlenstoffatomen ausgewählt sind, und wobei das zweite Polymer interne Si-H Bindungen aufweist;
(3) der reaktive Verdünner aus 2 bis 12 Gewichtsteilen, bezogen auf 100 Teile des Gesamtgewichts des Organosiloxanpolymers zumindest eines reaktiven Polydimethylsiloxanverdünners mit einer geringeren Viskosität als die der Polymere besteht, ein Molekulargewicht im Bereich von 1500 bis 2000 aufweist, eine Hydroxylfunktionalität von zumindest 2,5% hat und in wesentlichen frei ist von Kohlenstoff-Kohlenstoff Ungesättigtheit, und welcher der allgemeinen Formel (III) entspricht 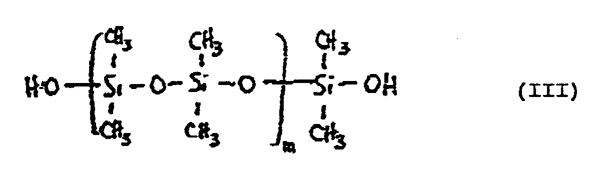 worin "m" eine ganze Zahl ist, welche passend gewählt wird um eine Verbindung mit dem gewünschten Molekulargewicht zu erhalten,
wobei die Mischung von Komponenten (1), (3) und dem inorganischen Füller eine Viskosität von 30 bis 65 Pa.s aufweist, und
(4) das Verfahren durchgeführt wird wobei die Komponenten (1), (2) und (3), Wasser und der inorganische Füller bei einer Temperatur nicht über 35°C zusammengemischt werden, um eine Flüssigkeitszusammensetzung zu bilden, die Reaktion dieser Zusammensetzung mit einem Katalysator auf Platin-Basis ausgeführt wird, um ein Gelierung zu erreichen, und Schäumen und Härten hiervon, um einen flexiblen Silikonschaum mit einer Dichte im Bereich von 80 bis 224 kg/m³ zu ergeben.

9. Verfahren nach Anspruch 7 oder 8, wobei die Gruppen R, R₁, R₂ und R₃ im ersten Organosiloxanpolymer aus Methyl, Ethyl und Phenyl ausgewählt sind.

10. Verfahren nach irgendeinem der Ansprüche 7 bis 9, wobei die Gruppen R, R₁, R₂ und R₃ im zweiten Organosiloxanpolymer aus Wasserstoff, Methyl, Ethyl und Phenyl ausgewählt sind.

11. Verfahren nach irgendeinem der Ansprüche 7 bis 10, wobei das erste Organosiloxanpolymer in der Zusammensetzung in einer, das zweite Organosiloxanpolymer überwiegenden Gewichtsmenge vorhanden ist.

12. Verfahren nach Anspruch 11, wobei die Organosiloxanpolymer-Mischung einen molaren überschuss an Si-H Bindungen über die Vinylbindungen aufweist.

13. Verfahren nach irgendeinem der Ansprüche 7 bis 12, worin die Zusammensetzung 3,5 bis 10 Gewichtsteile des reaktiven Verdünners, bezogen auf 100 Teile des Gesamtgewichts des Organosiloxanpolymers aufweist.

14. Geschäumtes Polyorganosiloxan niedriger Dichte, soweit nach irgendeinem der Ansprüche 1 bis 13 hergestellt.

15. Geschäumtes Polyorganosiloxan nach Anspruch 14, worin der inorganische Füller, soweit vorhanden, hierin homogen verteilt ist.

16. Geschäumtes Polyorganosiloxan nach Anspruch 15, worin der inorganische Füller in einer Menge von 35 bis 100 Gewichtsteilen, bezogen auf 100 Gewichtsteile des ersten Organosiloxanpolymers vorhanden ist.

17. Geschäumtes Polyorganosiloxan nach irgendeinem der Ansprüche 14 bis 16, mit einer Dichte von 64 bis 176 kg/m³.

18. Zusammensetzung, geeignet zur Herstellung von geschäumten Polyorganosiloxanen nach irgendeinem der Ansprüche 14 bis 17, mit einem Teil A und einem Teil B, wobei der Teil A ein vinylendendes Polyorganosiloxan und einen polydimethylsilanolendenden reaktiven Verdünner aufweist, wobei der reaktive Verdünner geringere Viskosität als das zuvor erwähnte vinylendende Polysiloxan und ein Molekulargewicht von 400 bis 2000 aufweist, und wobei der Teil B ein zweites Polyorganosiloxan ist, welches entlang der Siloxankette in nicht endender Position direkt and das Silikon gebundene Wasserstoffgruppen aufweist, wobei die Zusammensetzung ferner Wasser enthält, und geeignet ist, eine Reaktion zum Schäumen und Härten, unter der Aktion eines Katalysators auf Platin-Basis, durchzuführen.

19. Verwendung von Wasser und einem polydimethylsilanolendenden reaktiven Verdünner mit einem Molekulargewicht von 400 bis 2000, zum gleichzeitigen Bereitstellen von unterschiedlichen Hydroxylgruppenquellen im katalysatorunterstütztem Schäumen einer Polyorganosiloxanmischung welche ein erstes, vinylendendes Polyorganosiloxan mit einer höheren Viskosität als der reaktive Verdünner aufweist, und mit einem zweiten Polyorganosiloxan, welches in der Siloxankette Wasserstoffgruppen aufweist, die direkt an das Silikon in nicht endender Position gebunden sind, um eine gehärtete, flexible, feuerfeste Silikonschaumzusammensetzung zu erzeugen, welche eine Dichte von weniger als 224 kg/m³ aufweist, mit einer polymeren Grundstruktur, die einen überwiegenden Teil (wie hier definiert) der allgemeinen Formel (II) der Silikonstruktureinheit enthält: 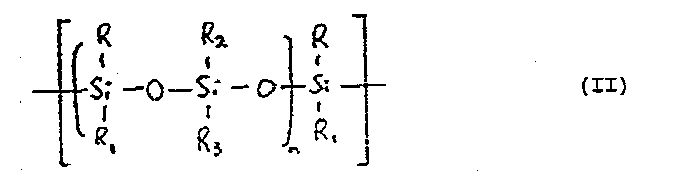 worin jedes von R, R₁, R₂, und R₃ gleich oder unterschiedlich sein kann, und in unabhängiger Weise aus Alkyl- und Arylgruppen mit 1 bis 4 Kohlenstoffatomen ausgewählt ist, worin "n" eine ganze Zahl von 2 bis 100 ist, und wobei ein geringer Teil (wie hier definiert) der ethylenischen Struktureinheit (CH₂-CH₂) die obigen Silikonstruktureinheiten verbindet.

## Patentansprüche (Patentansprüche für folgende(n) Vertragsstaat(en): AT)

1. Verfahren zur Herstellung einer gehärteten, flexiblen, feuerfesten Silikonschaumzusammensetzung mit einer Dichte von weniger als 224 kg/m³, umfassend:
ein Polyorganosiloxan mit einer polymeren Grundstruktur, die einen überwiegenden Teil der allgemeinen Formel (II) der Silikonstruktureinheit enthält: 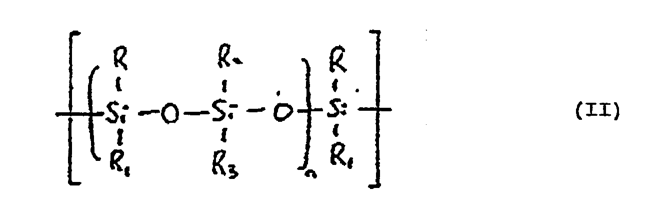 worin jedes R, R₁, R₂, und R₃ gleich oder unterschiedlich sein kann, und in unabhängiger Weise aus Alkyl- und Arylgruppen mit 1 bis 4 Kohlenstoffatomen ausgewählt ist, worin "n" eine ganze Zahl zwischen von 2 bis 100 ist, und wobei ein geringer Teil der ethylenischen Struktureinheit (CH₂-CH₂) die obigen Silikonstruktureinheiten verbindet,
welches Verfahren die folgenden Schritte umfasst:
Schäumen und Härten, in Gegenwart von Wasser, einer flüssigen Mehrkomponenten-Polymermischung, aus:
- als Teil A, ein vinylendendes Polyorganosiloxan und ein polydimethylsilanolendender reaktiver Verdünner, wobei der reaktive Verdünner geringere Viskosität als das zuvor erwähnte vinylendende Polysiloxan und ein Molekulargewicht von 400 bis 2000 aufweist, und,
- als Teil B, ein zweites Polyorganosiloxan welches entlang der Siloxankette in nicht endender Position direkt and das Silikon gebundene Wasserstoffgruppen aufweist, und
- ein Katalysator auf Platinbasis,
wobei die Reaktionsteilnehmer und Zustände derart sind, dass eine Zusammensetung wie oben definiert, erhalten wird.

2. Verfahren nach Anspruch 1, in dem auch ein anorganischer Füller in der Reaktionsmischung vorhanden ist.

3. Verfahren nach Anspruch 1 oder 2, in dem die in Teil A der Mischung enthaltenen grundlegenden Organosiloxanpolymere Vinylendgruppen enthalten, und eine Grundstruktur entsprechend der folgenden Formel (IIa) aufweisen: 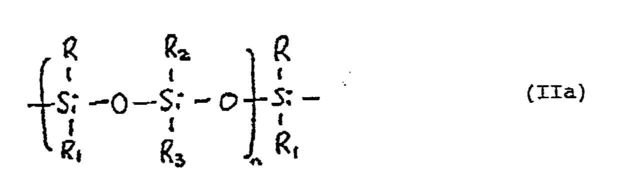 worin "n" eine ganze Zahl von 2 bis 100 und R, R₁, R₂ und R₃ in unabhängiger Weise aus Phenylgruppen mit 1-4 Kohlenstoffatomen ausgewählt sind.

4. Verfahren nach irgendeinem der Ansprüche 1 bis 3, in dem der reaktive Verdünner eine Hydroxylfunktionalität von zumindest 2,5% aufweist.

5. Verfahren nach irgendeinem der Ansprüche 1 bis 4, in dem ein anorganischer Füller in der Reaktionsmischung vorhanden ist und der reaktive verdünner in einer Menge von 2 bis 12 Gewichtsteilen, bezogen auf 100 Teile des Gesamtgewichts von vinylendendem Polyorganosiloxan und inorganischem Füller, verwendet wird.

6. Verfahren nach irgendeinem der Ansprüche 1 bis 5, in dem die relativen Mengen von Wasser und reaktivem Verdünner in der Gesamtmischung derart gewählt sind, dass in der schäumenden Mischung 5 bis 15% der Hydroxylgruppen, auf molarer Basis, vom reaktiven Silanolverdünner, und 95 bis 85 % vom Wasser beigesteuert werden.

7. Verfahren nach Anspruch 2, wobei:
(a) das vinylendende Polyorganosiloxan ein Organosiloxanpolymer der allgemeinen Formel (IV) ist 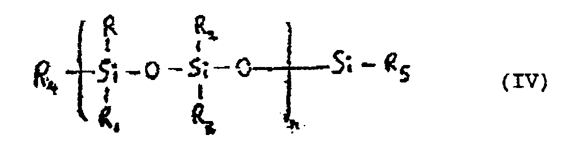 worin "n" eine ganze Zahl von 2 bis 100 ist und R, R₁, R₂ und R₃ in unabhängiger Weise aus Alkyl- und Phenylgruppen mit 1 bis 4 Kohlenstoffatomen, und R₄ und R₅ in unabhängiger Weise aus Wasserstoff, Hydroxyl, blockiertem Hydroxyl und Vinyl ausgewählt sind, wobei zumindest einige der R₄ und R₅ Vinyl sind;
(b) der reaktive Verdünner ein polydimethylsilanolendender reaktiver Verdünner ist, mit geringerer Viskosität als die des vinylendenden Polyorganosiloxans aus obigem (a), wobei der reaktive Verdünner der Formel (III) entspricht 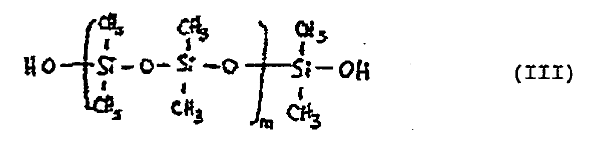 wobei "m" eine ganze Zahl ist, welche passend gewählt ist um das gewünschte Molekulargewicht zu erreichen;
(c) das zweite Polyorganosiloxan ein Organosiloxanpolymer der allgemeinen Formel (IV) ist, in der R, R₁, R_{2,} R₃, R_{4,} und R₅ in unabhängiger Weise aus Wasserstoff, und Alkyl- und Phenylgruppen mit 1 bis 4 Kohlenstoffatomen ausgewählt sind, wobei zumindest einige der R₂ Wasserstoff sind;
wobei die relative Menge an Siloxanverdünner von 2 bis 12 Gewichtsteilen, bezogen auf 100 Gewichtsteile des gesamten Organosiloxans beträgt;
wobei die Viskosität der flüssigen Mischung der Komponenten (a), (b) und (c) und des inorganischen Füllers im Bereich von 30 bis 65 Pa.s liegt, und
(d) das Verfahren durchgeführt wird in dem die Komponenten (a), (b) und (c), Wasser und der inorganische Füller in einem Formbehälter zusammengemischt werden, um eine im wesentlichen homogene Mischung hiervon zu formen, der flüssigen Mischung in Gegenwart eines passenden Katalysators für eine Kondensations- und Additionspolymerisation erlaubt wird zu polymerisieren um einen feuerfesten Schaum geringer Dichte zu erzeugen, und Härten des derart erzeugten schaums.

8. Verfahren nach Anspruch 2, worin:
(1) das vinylendende Polyorganosiloxan zumindest ein flüssiges ungehärtetes Organosiloxanpolymer ist, mit einer struktur, die der allgemeinen Formel (IIa) entspricht 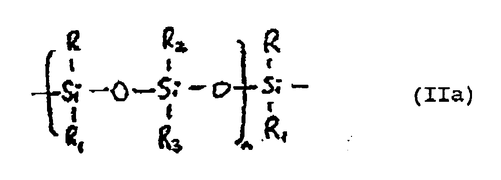 worin "n" eine ganze Zahl von 2 bis 50 ist und R, R₁, R₂ und R₃ in unabhängiger Weise aus Alkyl- und Phenylgruppen mit 1 bis 4 Kohlenstoffatomen ausgewählt sind, und Vinylendgruppen aufweisen;
(2) das zweite Polyorganosiloxan zumindest ein flüssiges, ungehärtetes Organosiloxanpolymer ist mit einer Struktur, die der obigen allgemeinen Formel (IIa) entspricht, worin R, R₁, R₂ und R₃ in unabhängiger Weise aus Wasserstoff und Alkyl- und Phenylgruppen mit 1 bis 4 Kohlenstoffatomen ausgewählt sind, und wobei das zweite Polymer interne Si-H Bindungen aufweist;
(3) der reaktive verdünner aus 2 bis 12 Gewichtsteilen, bezogen auf 100 Teile des Gesamtgewichts des Organosiloxanpolymers zumindest eines reaktiven Polydimethylsiloxanverdünners mit einer geringeren Viskosität als die der Polymere besteht, ein Molekulargewicht im Bereich von 1500 bis 2000 aufweist, eine Hydroxylfunktionalität Von zumindest 2,5% hat und im wesentlichen frei ist von Kohlenstoff-Kohlenstoff ungesättigtheit, und welcher der allgemeinen Formel (III) entspricht 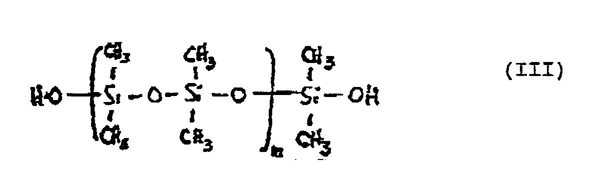 worin "m" eine ganze Zahl ist, welche passend gewählt wird um eine Verbindung mit dem gewünschten Molekulargewicht zu erhalten,
wobei die Mischung von Komponenten (1), (3) und dem inorganischen Füller eine Viskosität von 30 bis 65 Pa.s aufweist, und
(4) das Verfahren durchgeführt wird wobei die Komponenten (1), (2) und (3), Wasser und der inorganische Füller bei einer Temperatur nicht über 35°C zusammengemischt werden, um eine Flüssigkeitszusammensetzung zu bilden, die Reaktion dieser Zusammensetzung mit einem Katalysator auf Platin-Basis ausgeführt wird, um ein Gelierung zu erreichen, und Schäumen und Härten hiervon, um einen flexiblen Silikonschaum mit einer Dichte im Bereich Von 80 bis 224 kg/m³ zu ergeben.

9. Verfahren nach Anspruch 7 oder 8, wobei die Gruppen R, R₁, R₂ und R₃ im ersten Organosiloxanpolymer aus Methyl, Ethyl und Phenyl ausgewählt sind.

10. Verfahren nach irgendeinem der Ansprüche 7 bis 9, wobei die Gruppen R, R₁, R₂ und R₃ im zweiten Organosiloxanpolymer aus Wasserstoff, Methyl, Ethyl und Phenyl ausgewählt sind.

11. Verfahren nach irgendeinen der Ansprüche 7 bis 10, wobei das erste Organosiloxanpolymer in der Zusammensetzung in einer, das zweite Organosiloxanpolymer überwiegenden Gewichtsmenge vorhanden ist.

12. Verfahren nach Anspruch 11, wobei die Organosiloxanpolymer-Mischung einen molaren Überschuss an Si-H Bindungen über die Vinylbindungen aufweist.

13. Verfahren nach irgendeinen der Ansprüche 7 bis 12, worin die Zusammensetzung 3,5 bis 10 Gewichtsteile des reaktiven Verdünners, bezogen auf 100 Teile des Gesamtgewichts des Organosiloxanpolymers aufweist.

14. Verwendung von Wasser und einem polydimethylsilanolendenden reaktiven Verdünner mit einem Molekulargewicht von 400 bis 2000, zum gleichzeitigen Bereitstellen von unterschiedlichen Hydroxylgruppenquellen im katalysatorunterstütztem Schäumen einer Polyorganosiloxanmischung welche ein erstes, vinylendendes Polyorganosiloxan mit einer höheren Viskosität als der reaktive Verdünner aufweist, und mit einem zweiten Polyorganosiloxan, welches in der Siloxankette Wasserstoffgruppen aufweist, die direkt an das Silikon in nicht endender Position gebunden sind, um eine gehärtete flexible, feuerfeste Silikonschaumzusammensetzung zu erzeugen, welche eine Dichte von weniger als 224 kg/m³ aufweist, mit einer polymeren Grundstruktur, die einen überwiegenden Teil (wie hier definiert) der allgemeinen Formel (II) der Silikonstruktureinheit enthält: 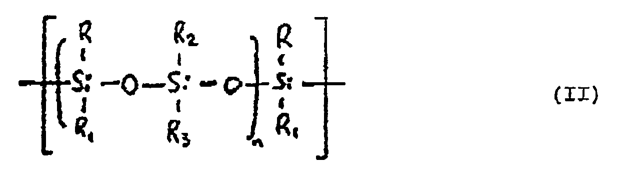 worin jedes von R, R₁, R₂, und R₃ gleich oder unterschiedlich sein kann, und in unabhängiger Weise aus Alkyl- und Arylgruppen mit 1 bis 4 Kohlenstoffatomen ausgewählt ist, worin "n" eine ganze Zahl von 2 bis 100 ist, und wobei ein geringer Teil (wie hier definiert) der ethylenischen Struktureinheit (CH₂-CH₂) die obigen Silikonstruktureinheiten verbindet.

## Revendications (Revendications pour l'(les) Etat(s) contractant(s) suivant(s): BE, CH, LI, DE, FR, GB, IT, LU, NL, SE)

1. Procédé de préparation d'une composition de mousse silicone vulcanisée, flexible, résistante au feu, de densité inférieure à 224 kg/m³, la composition comprenant :
un polyorganosiloxane présentant une structure en squelette polymère comprenant une proportion majeure d'unité structurelle silicone ayant la formule générale (III) 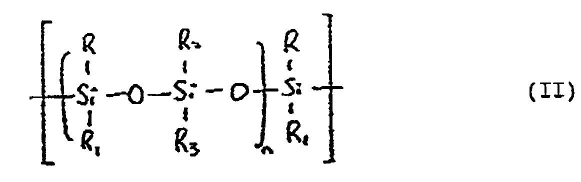 dans laquelle chacun des groupes R, R₁, R₂, et R₃ peuvent être les mêmes ou différents et est choisi indépendamment parmi les groupes alkyles C₁-C₄ et les groupes aryles, "n" est un nombre entier compris entre 2 et 100, et contenant une proportion mineure d'unité structurelle éthylénique (-CH₂-CH₂-) reliant les unités structurelles silicones ci-dessus ;
ce procédé comprenant :
une étape consistant à faire mousser et à vulcaniser un mélange polymère liquide multicomposant comprenant
comme partie A, un polyorganosiloxane terminé par un groupe vinyle, un diluant réactif terminé par un groupe polydiméthyl-silanol, le diluant réactif ayant une viscosité plus basse que le polyorganosiloxane terminé par un groupe vinyle mentionné ci-dessus, et un poids moléculaire compris entre 400 et 2 000, et
comme partie B, un second polyorganosiloxane qui a des groupes hydrogènes liés directement au silicium en positions non terminales le long de la chaîne polysiloxane,
en présence d'eau
et d'un catalyseur à base de platine
les réactifs et les conditions étant telles que la composition définie ci-dessus se forme.

2. Procédé selon la revendication 1, dans lequel le mélange réactionnel comprend également une charge minérale.

3. Procédé selon la revendication 1 ou 2, dans lequel les polymères à base d'organosiloxane compris dans la partie A du mélange contiennent des groupes terminaux vinyles et présentent une structure de base correspondant à la formule générale (IIa) 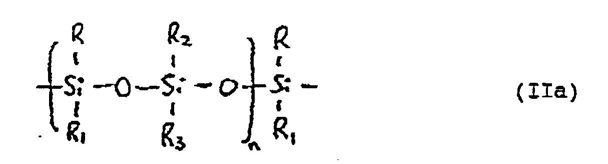 où "n" est un nombre entier compris entre 2 à 100 et R, R₁ R₂ et R₃ sont indépendamment choisis parmi les groupes alkyles C₁-₄ et les groupes phényles.

4. Procédé selon l'une des revendications 1 à 3, dans lequel le diluant réactif a une fonctionnalité hydroxyle d'au moins 2,5 %.

5. Procédé selon l'une des revendications 1 à 4, dans lequel la charge minérale est présente dans le mélange réactionnel et où le diluant réactif est utilisé en quantité compris entre 2 à 12 parties en poids, pour 100 parties en poids combiné de polyorganosiloxane terminé par un groupe vinyle et de charge minérale.

6. Procédé selon l'une des revendications 1 à 5, dans lequel les quantités relatives d'eau ou de diluant réactif dans le mélange total sont choisies de telle sorte que, dans le mélange moussant, de 5 à 15 % des groupes d'hydroxyles sur une base moléculaire sont mis à contribution par le diluant réactif silanol et de 85 à 95 % sont mis à contribution par de l'eau.

7. Procédé selon la revendication 2, dans lequel
(a) le polyorganosiloxane terminé par un groupe vinyle est un polymère organosiloxane de formule générale (IV) 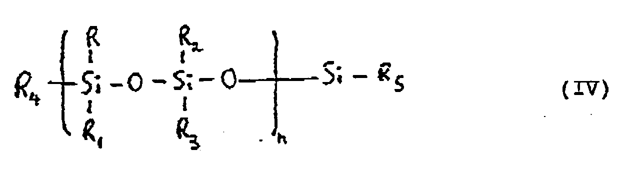 dans lequel "n" est un nombre entier compris entre 2 à 100, R, R₁, R₂ et R₃ sont choisis indépendamment parmi les groupes ailes C₁₋₄ et les groupes phényles, et R₄ et R₅ sont choisis indépendamment parmi les groupes hydrogènes, hydroxy, les hydroxy et vinyles bloqués, au moins certains des groupes R₄ et R₅ étant des groupes vinyles ;
(b) le diluant réactif est un diluant réactif terminé par un groupe polydiméthyl-silanol, de viscosité plus basse que le polyorganosiloxane terminé par un groupe vinyle présent ci-dessus dans (a), le diluant réactif ayant la formule (III) 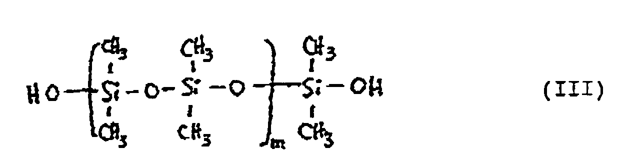 où "m" est un nombre entier choisi de façon à donner le poids moléculaire désiré ;
(c) le deuxième polyorganosiloxane est un polymère organosiloxane de formule générale (IV) dans lequel R, R₁, R₂, R₃, R₄ et R₅ sont choisis indépendamment parmi les groupes hydrogènes, C₁₋₄ alkyles et phényles, au moins certains des groupes R₂ représentant l'hydrogène ;
la quantité relative de diluant siloxane étant comprise entre 2 et 12 parties en poids pour 100 parties en poids des polymères organosiloxanes totaux ;
la viscosité du mélange liquide des composants (a), (b) et de la charge minérale étant comprise entre 30 et 65 Pa.s ; et
(d) le procédé est conduit en mélangeant les composants (a), (b), (c), l'eau et la charge minérale dans un récipient moulé pour former un mélange liquide sensiblement homogène, en laissant le mélange liquide polymériser sous l'influence d'un catalyseur de polymérisation par condensation et addition pour former une mousse à basse densité résistante au feu, et à vulcaniser la mousse ainsi formée.

8. Procédé selon la revendication 2, dans lequel
(1) le polyorganosiloxane terminé par un groupe vinyle est au moins un polymère organosiloxane non vulcanisé liquide ayant une structure correspondant à la formule générale (IIa) 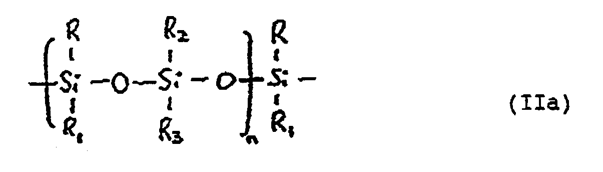 où "n" est un nombre entier compris entre 2 à 50, R, R₁, R₂ et R₃ sont choisis indépendamment parmi les groupes C₁₋₄ alkyles et les groupes phényles, et ayant des groupes vinyles terminaux ;
(2) le second polyorganosiloxane est au moins un polymère organosiloxane liquide non vulcanisé ayant une structure correspondant à la formule générale (IIa) ci-dessus dans laquelle R, R₁, R₂ et R₃ sont choisis indépendamment parmi les groupes hydrogènes, C₁₋₄ alkyles et phényles, le deuxième polymère ayant des liaisons internes Si-H ;
(3) le diluant réactif correspond de 2 à 12 parties en poids pour 100 parties du poids total des polymères organosiloxanes, d'au moins un diluant polydiméthyl-siloxane de viscosité inférieur à celle des polymères et ayant un poids moléculaire compris entre 1500 et 2000, une fonctionnalité hydroxyle d'au moins 2,5 %, étant sensiblement sans insaturation carbone-carbone et correspondant à la formule générale (III) 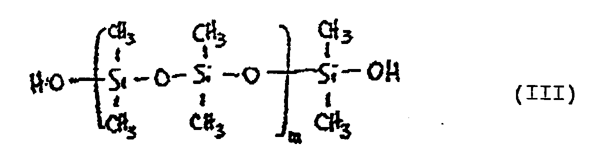 dans laquelle "m" est un nombre entier choisi de façon à fournir un composé du poids moléculaire désiré,
le mélange des composants (1), (3) et la charge minérale ayant une viscosité comprise entre 30 et 65 Pa.s ; et
(4) le procédé étant conduit en mélangeant les composants (1), (2), (3), l'eau et la charge minérale à des températures n'excédant pas 35°C pour former une composition liquide et en faisant réagir cette composition avec un catalyseur à base de platine pour la gélifier, la mousser et la vulcaniser afin d'obtenir une mousse silicone flexible de densité comprise entre 80 et 224 kg/m³.

9. Procédé selon l'une des revendications 7 ou 8, dans lequel les groupes R, R₁, _{R}2 et R₃ du premier polymère organosiloxane sont choisis parmi les groupe méthyles, éthyles et phényles.

10. Procédé selon l'une des revendications 7 à 9, dans lequel les groupes R, R₁, R₂ et R₃ du deuxième polymère organosiloxane sont choisis parmi les groupes hydrogènes, méthyles, éthyles et phényles.

11. Procédé selon l'une des revendication 7 à 10, dans lequel le premier polymère organosiloxane est présent dans la composition en quantité pondérale excédant celle du deuxième polymère organosiloxane.

12. Procédé selon la revendication 11, dans lequel le mélange de polymère organosiloxane contient un excès molaire de liaison Si-H par rapport aux liaisons vinyles.

13. Procédé selon l'une des revendications 7 à 12, dans lequel la composition comprend entre 3,5 et 10 parties en poids du diluant réactif pour 100 parties du poids total des polymères organosiloxanes.

14. Polyorganosiloxanes en mousse de basse densité préparés par un procédé selon l'une des revendications 1 à 13.

15. Polyorganosiloxanes en mousse selon la revendication 14, dans lesquels la charge minérale, si elle est présente, est dispersée de façon sensiblement homogène.

16. Polyorganosiloxanes en mousse selon la revendication 15, dans lesquels la charge minérale est présente en quantité comprise entre 35 et 100 parties en poids pour 100 parties en poids des premiers polymères organosiloxanes.

17. Polyorganosiloxanes en mousse selon l'une des revendications 14 à 16, ayant une densité comprise entre 64 et 176 kg/m³.

18. Composition convenant à la préparation de polyorganosiloxanes en mousse de basse densité selon l'une des revendications 14 à 17, comprenant une partie A et une partie B, la partie A comprenant un polyorganosiloxane terminé par un groupe vinyle et un diluant réactif terminé par un groupe polydiméthyle-silanol, le diluant réactif ayant une densité inférieure à celle du polyorganosiloxane terminé par un groupe vinyle mentionné ci-dessus et un poids moléculaire compris entre 400 et 2000, et la partie B comprenant un deuxième polyorganosiloxane ayant des groupes hydrogènes directement liés au silicium en positions non terminales le long de la chaîne silicone, la composition comprenant aussi de l 'eau et étant capable de réagir pour mousser et vulcaniser sous l'action d'un catalyseur à base de platine.

19. Utilisation d'eau et d'un diluant réactif terminé par un groupe polydiméthyl-silanol de poids moléculaire compris entre 400 et 2000 pour fournir des sources simultanées différentes de groupes hydroxyles dans le moussage catalytique d'un mélange polyorganosiloxane comprenant un premier polyorganosiloxane terminé par un groupe vinyle, de viscosité plus élevée que le diluant réactif, et un deuxième polyorganosiloxane qui a des groupes hydrogènes directement liés au silicium en positions non terminales le long de la chaîne silicone, afin de préparer une composition de mousse silicone, flexible, résistante au feu, de densité inférieure à 224 kg/m³, comprenant un polyorganosiloxane ayant une structure en squelette polymère contenant une proportion majeure (comme définie) d'unité structurelle silicone de formule générale (II) 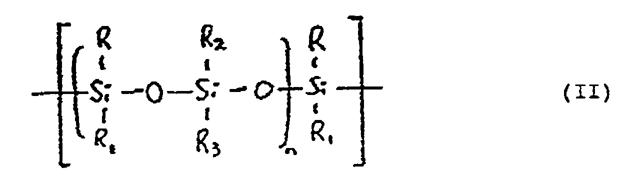 dans laquelle chacun des groupes R, R₁, R₂ et R₃ peuvent être identiques ou différents, et est choisi indépendamment parmi les groupes alkyles C₁₋₄ et les groupes aryles, "n" est un nombre entier compris entre 2 à 100, et ayant une proportion mineure (comme définie) d'unité structurelle étylénique (CH2-CH2-) ayant les unités structurelles silicones mentionnées ci-dessus.

## Revendications (Revendications pour l'(les) Etat(s) contractant(s) suivant(s): AT)

1. Procédé de préparation d'une composition de mousse silicone vulcanisée, flexible, résistante au feu, de densité inférieure à 224 kg/m³ la composition comprenant :
un polyorganosiloxane présentant une structure en squelette polymère comprenant une proportion majeure d'unité structurelle silicone ayant la formule générale (III) 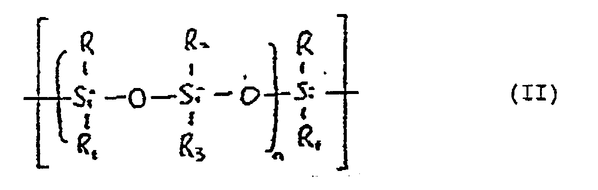 dans laquelle chacun des groupes R, R₁, R₂, et R₃ peuvent être les mêmes ou différents et est choisi indépendamment parmi les groupes alkyles C₁-C₄ et les groupes aryles, "n" est un nombre entier compris entre 2 et 100, et contenant une proportion mineure d'unité structurelle éthylénique (-CH₂-CH₂-) reliant les unités structurelles silicones ci-dessus ;
ce procédé comprenant :
une étape consistant à faire mousser et à vulcaniser un mélange polymère liquide multicomposant comprenant
comme partie A, un polyorganosiloxane terminé par un groupe vinyle, un diluant réactif terminé par un groupe polydiméthyl-silanol, le diluant réactif ayant une viscosité plus basse que le polyorganosiloxane terminé par un groupe vinyle mentionné ci-dessus, et un poids moléculaire compris entre 400 et 2 000, et
comme partie B, un second polyorganosiloxane qui a des groupes hydrogènes liés directement au silicium en positions non terminales le long de la chaîne polysiloxane,
en présence d'eau
et d'un catalyseur à base de platine
les réactifs et les conditions étant telles que la composition définie ci-dessus se forme.

2. Procédé selon la revendication 1, dans lequel le mélange réactionnel comprend également une charge minérale.

3. Procédé selon la revendication 1 ou 2, dans lequel les polymères à base d'organosiloxane compris dans la partie A du mélange contiennent des groupes terminaux vinyles et présentent une structure de base correspondant à la formule générale (IIa) 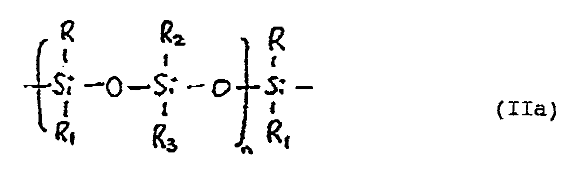 où "n" est un nombre entier compris entre 2 à 100 et R, R₁ R₂ et R₃ sont indépendamment choisis parmi les groupes alkyles C₁₋₄ et les groupes phényles.

4. Procédé selon l'une des revendications 1 à 3, dans lequel le diluant réactif a une fonctionnalité hydroxyle d'au moins 2,5 %.

5. Procédé selon l'une des revendications 1 à 4, dans lequel la charge minérale est présente dans le mélange réactionnel et où le diluant réactif est utilisé en quantité compris entre 2 à 12 parties en poids, pour 100 parties en poids combiné de polyorganosiloxane terminé par un groupe vinyle et de charge minérale.

6. Procédé selon l'une des revendications 1 à 5, dans lequel les quantités relatives d'eau ou de diluant réactif dans le mélange total sont choisies de telle sorte que, dans le mélange moussant, de 5 à 15 % des groupes d'hydroxyles sur une base moléculaire sont mis à contribution par le diluant réactif silanol et de 85 à 95 % sont mis à contribution par de l'eau.

7. Procédé selon la revendication 2, dans lequel
(a) le polyorganosiloxane terminé par un groupe vinyle est un polymère organosiloxane de formule générale (IV) 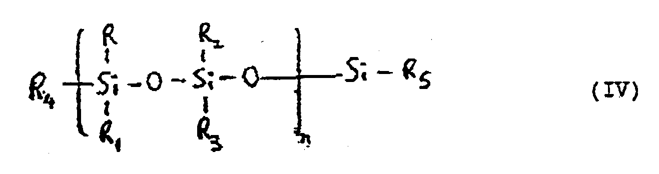 dans lequel "n" est un nombre entier compris entre 2 à 100, R, R₁, R₂ et R₃ sont choisis indépendamment parmi les groupes alkyles C₁₋₄ et les groupes phényles, et R₄ et R₅ sont choisis indépendamment parmi les groupes hydrogènes, hydroxy, les hydroxy et vinyles bloqués, au moins certains des groupes R₄ et R₅ étant des groupes vinyles ;
(b) le diluant réactif est un diluant réactif terminé par un groupe polydiméthyl-silanol, de viscosité plus basse que le polyorganosiloxane terminé par un groupe vinyle présent ci-dessus dans (a), le diluant réactif ayant la formule (III) 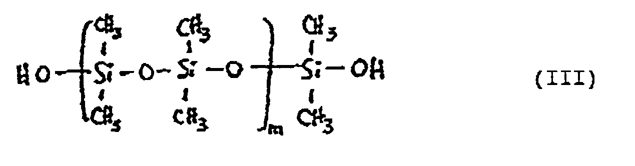 où "m" est un nombre entier choisi de façon à donner le poids moléculaire désiré ;
(c) le deuxième polyorganosiloxane est un polymère organosiloxane de formule générale (IV) dans lequel R, R₁, R₂, R₃, R₄ et R₅ sont choisis indépendamment parmi les groupes hydrogènes, C₁₋₄ alkyles et phényles, au moins certains des groupes R₂ représentant l'hydrogène ;
la quantité relative de diluant siloxane étant comprise entre 2 et 12 parties en poids pour 100 parties en poids des polymères organosiloxanes totaux;
la viscosité du mélange liquide des composants (a), (b) et de la charge minérale étant comprise entre 30 et 65 Pa.s ; et
(d) le procédé est conduit en mélangeant les composants (a), (b), (c), l'eau et la charge minérale dans un récipient moulé pour former un mélange liquide sensiblement homogène, en laissant le mélange liquide polymériser sous l'influence d'un catalyseur de polymérisation par condensation et addition pour former une mousse à basse densité résistante au feu, et à vulcaniser la mousse ainsi formée.

8. Procédé selon la revendication 2, dans lequel
(1) le polyorganosiloxane terminé par un groupe vinyle est au moins un polymère organosiloxane non vulcanisé liquide ayant une structure correspondant à la formule générale (IIa) 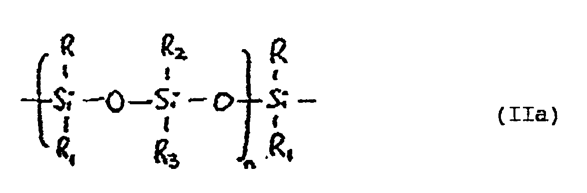 où "n" est un nombre entier compris entre 2 à 50, R, R₁, R₂ et R₃ sont choisis indépendamment parmi les groupes C₁₋₄ alkyles et les groupes phényles, et ayant des groupes vinyles terminaux;
(2) le second polyorganosiloxane est au moins un polymère organosiloxane liquide non vulcanisé ayant une structure correspondant à la formule générale (IIa) ci-dessus dans laquelle R, R₁, R₂ et R₃ sont choisis indépendamment parmi les groupes hydrogènes, C₁₋₄ alkyles et phényles, le deuxième polymère ayant des liaisons internes Si-H ;
(3) le diluant réactif correspond de 2 à 12 parties en poids pour 100 parties du poids total des polymères organosiloxanes, d'au moins un diluant polydiméthyl-siloxane de viscosité inférieur à celle des polymères et ayant un poids moléculaire compris entre 1500 et 2000, une fonctionnalité hydroxyle d'au moins 2,5 %, étant sensiblement sans insaturation carbone-carbone et correspondant à la formule générale (III) 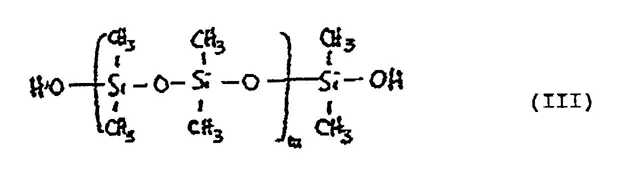 dans laquelle "m" est un nombre entier choisi de façon à fournir un composé du poids moléculaire désiré,
le mélange des composants (1), (3) et la charge minérale ayant une viscosité comprise entre 30 et 65 Pa.s ; et
(4) le procédé étant conduit en mélangeant les composants (1), (2), (3), l'eau et la charge minérale à des températures n'excédant pas 35°C pour former une composition liquide et en faisant réagir cette composition avec un catalyseur à base de platine pour la gélifier, la mousser et la vulcaniser afin d'obtenir une mousse silicone flexible de densité comprise entre 80 et 224 kg/m³.

9. Procédé selon l'une des revendications 7 ou 8, dans lequel les groupes R, R₁, _{R}2 et R₃ du premier polymère organosiloxane sont choisis parmi les groupe méthyles, éthyles et phényles.

10. Procédé selon l'une des revendications 7 à 9, dans lequel les groupes R, R₁, R₂ et R₃ du deuxième polymère organosiloxane sont choisis parmi les groupes hydrogènes, méthyles, éthyles et phényles.

11. Procédé selon l'une des revendication 7 à 10, dans lequel le premier polymère organosiloxane est présent dans la composition en quantité pondérale excédant celle du deuxième polymère organosiloxane.

12. Procédé selon la revendication 11, dans lequel le mélange de polymère organosiloxane contient un excès molaire de liaison Si-H par rapport aux liaisons vinyles.

13. Procédé selon l'une des revendications 7 à 12, dans lequel la composition comprend entre 3,5 et 10 parties en poids du diluant réactif pour 100 parties du poids total des polymères organosiloxanes.

14. Utilisation d'eau et d'un diluant réactif terminé par un groupe polydiméthyl-silanol de poids moléculaire compris entre 400 et 2000 pour fournir des sources simultanées différentes de groupes hydroxyles dans le moussage catalytique d'un mélange polyorganosiloxane comprenant un premier polyorganosiloxane terminé par un groupe vinyle, de viscosité plus élevée que le diluant réactif, et un deuxième polyorganosiloxane qui a des groupes hydrogènes directement liés au silicium en positions non terminales le long de la chaîne silicone, afin de préparer une composition de mousse silicone, flexible, résistante au feu, de densité inférieure à 224 kg/m³, comprenant un polyorganosiloxane ayant une structure en squelette polymère contenant une proportion majeure (comme définie) d'unité structurelle silicone de formule générale (II) 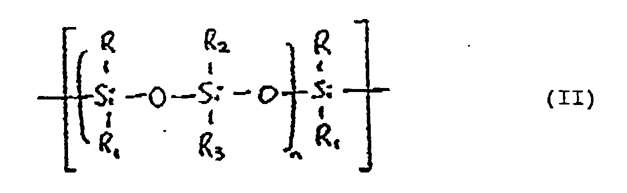 dans laquelle chacun des groupes R, R₁, R₂ et R₃ peuvent être identiques ou différents, et est choisi indépendamment parmi les groupes alkyles C₁₋₄ et les groupes aryles, "n" est un nombre entier compris entre 2 à 100, et ayant une proportion mineure (comme définie) d'unité structurelle étylénique (CH2-CH2-) ayant les unités structurelles silicones mentionnées ci-dessus.
